# EUROPÄISCHE PATENTSCHRIFT

(11) **EP 1 861 205 B1**
(45) Veröffentlichungstag und Bekanntmachung des Hinweises auf die Patenterteilung: **27.10.2010**
(21) Anmeldenummer: 06707593.7
(22) Anmeldetag: 17.03.2006
(51) Int. Cl.: B05B 15/12

(54) **Anlage zum Lackieren von Gegenständen**
Installation for painting objects
Installation pour la peinture d'objets

(30) Priorität: 24.03.2005 DE 102005013711
(43) Veröffentlichungstag der Anmeldung: 05.12.2007
(60) Teilanmeldung: 10177199.6
(73) Patentinhaber: Dürr Systems GmbH, 74321 Bietigheim-Bissingen (DE)
(72) Erfinder: WIELAND, Dietmar, 70180 Stuttgart (DE); TOBISCH, Wolfgang, 70193 Stuttgart (DE); RUNDEL, Klaus, 73728 Esslingen (DE); RAJTSCHAN, Alexander, 70469 Stuttgart (DE)
(74) Vertreter: Hoeger, Stellrecht & Partner Patentanwälte
(86) Internationale Anmeldenummer: PCT/EP2006/002469
(87) Internationale Veröffentlichungsnummer: WO 2006/099999

(56) Entgegenhaltungen:
- DE-A1- 4 140 490
- DE-A1- 4 211 465
- DE-U1- 9 400 668
- US-A- 5 169 417

## Beschreibung

Die vorliegende Erfindung betrifft eine Anlage zum Lackieren von Gegenständen, insbesondere von Fahrzeugkarosserien, umfassend mindestens eine Lackierkabine und mindestens eine Vorrichtung zum Abtrennen von Nasslack-Overspray aus einem Overspray-Partikel enthaltenden Abluftstrom, wobei die Overspray-Partikel in einem Applikationsbereich der Lackieranlage in den Abluftstrom gelangen.

Solche Vorrichtungen werden in Anlagen zum Lackieren von Werkstücken, insbesondere zum Spritzlackieren von Fahrzeugkarosserien, eingesetzt, in denen ein Luftstrom durch einen Applikationsbereich der Anlage erzeugt wird, welcher überschüssigen Nasslack aus dem Applikationsbereich abführt.

Es ist bekannt, den mitgeführten Nasslack-Overspray in einer Auswaschungsanlage mittels einer Waschflüssigkeit aus dem Abluftstrom abzuscheiden.

Die bekannten Auswaschungsanlagen haben jedoch insbesondere bei Umluftführung den Nachteil, dass dem Abluftstrom, aus dem der Nasslack-Overspray abgeschieden wird, eine hohe Feuchtigkeitsmenge zugeführt wird, so dass der Abluftstrom nach erfolgter Abscheidung des Nasslack-Oversprays einer energieintensiven Entfeuchtung unterzogen werden muss.

Ferner ist für die Aufbereitung der mit dem Nasslack-Overspray beladenen Waschflüssigkeit ein großer Aufwand erforderlich.

Die DE 42 11 465 A1 offenbart eine Anlage zum Lackieren von Gegenständen gemäß dem Oberbegriff von Anspruch 1.

Der vorliegenden Erfindung liegt die Aufgabe zugrunde, eine Anlage der eingangs genannten Art zu schaffen, welche eine Abtrennung des Nasslack-Oversprays aus dem Abluftstrom in einfacher, zuverlässiger und energiesparender Weise ermöglicht.

Diese Aufgabe wird durch eine Anlage nach Anspruch 1 gelöst.

Besondere Ausgestaltungen der erfindungsgemäßen Anlage sind Gegenstand der Ansprüche 2 bis 24.

Unter einem regenerierbaren Oberflächenfilter ist ein Filter zu verstehen, das eine Filteroberfläche aufweist, an welcher der vom Abluftstrom mitgeführte Nasslack-Overspray abgeschieden wird, und das, vorzugsweise im laufenden Betrieb der Vorrichtung, von dem darauf abgeschiedenen Lack-Overspray reinigbar ist.

Ein solches regenerierbares Oberflächenfilter ist eine "trockene" Abtrennvorrichtung, in welcher keine Flüssigkeit zum Auswaschen der Overspray-Partikel aus dem Abluftstrom verwendet wird, sondern Filterelemente zum Abtrennen der Overspray-Partikel aus dem Luftstrom verwendet werden.

Dabei kann die Abreinigung des regenerierbaren Oberflächenfilters mittels einer "trockenen" Abreinigungsvorrichtung, d.h. ohne Verwendung einer Reinigungsflüssigkeit, oder mittels einer "nassen" Abreinigungsvorrichtung, d.h. unter Verwendung einer Reinigungsflüssigkeit, erfolgen.

Eine "trockene" Abtrennvorrichtung kann auch mit einer "nassen" Abreinigungsvorrichtung versehen sein, solange nur die Abscheidung der Overspray-Partikel an dem regenerierbaren Abtrennelement auf trockene Weise, d.h. ohne Auswaschung mittels einer Auswaschflüssigkeit, erfolgt.

Vorzugsweise erfolgt die gesamte Abtrennung von Nasslack-Overspray aus dem Overspray-Partikel enthaltenden Abluftstrom vollständig trocken, das heißt ohne Verwendung einer Flüssigkeit zum Auswaschen der Overspray-Partikel aus dem Abluftstrom.

Durch die Verwendung eines regenerierbaren Oberflächenfilters in der Abtrennvorrichtung entfällt die Notwendigkeit, eine Auswaschungsanlage und die zugehörige Wasseraufbereitung vorzusehen. Hierdurch werden der Energieverbrauch der Abtrennvorrichtung und (durch den Wegfall der Wasseraufbereitung) auch der Platzbedarf der Vorrichtung deutlich reduziert.

Die Abreinigbarkeit des Oberflächenfilters gewährleistet ferner eine lange Standzeit des Filters auch bei großen Mengen an anfallendem Nasslack-Overspray.

Durch das Vorsehen eines verengten Bereichs im Strömungsweg des Abluftstroms von dem Applikationsbereich zu der Abtrennvorrichtung wird ferner erreicht, dass das regenerierbare Oberflächenfilter vor direkten Einwirkungen aus dem Applikationsbereich geschützt ist.

Wenn die mittlere Strömungsrichtung des Abluftstroms beim Passieren des verengten Bereichs im Wesentlichen erhalten bleibt, wird erreicht, dass eine vorzeitige Abscheidung von Nasslack-Overspray an Begrenzungswänden des verengten Bereichs vermieden wird.

Bei der erfindungsgemäßen Anlage ist vorgesehen, dass der verengte Bereich unterhalb des Applikationsbereiches angeordnet ist.

Der Applikationsbereich ist in der Lackierkabine angeordnet, und der verengte Bereich ist innerhalb einer vertikalen Projektion der Grundfläche der Lackierkabine angeordnet.

Um zu vermeiden, dass sich Nasslack-Overspray aus dem Abluftstrom bereits an den Begrenzungswänden des verengten Bereichs niederschlägt, ist es von Vorteil, wenn die Ausdehnung des verengten Bereiches in der Strömungsrichtung des Abluftstroms kürzer ist als ungefähr 6 m, vorzugsweise kürzer ist als ungefähr 1 m, insbesondere kürzer ist als ungefähr 0,5 m.

Wenn der Applikationsbereich in einer Lackierkabine mit einer Längsrichtung angeordnet ist, so erstreckt sich der verengte Bereich vorzugsweise in der Längsrichtung der Lackierkabine über im wesentlichen die gesamte Länge der Lackierkabine.

Dabei kann der verengte Bereich in der Längsrichtung der Lackierkabine in mehrere verengte Teil-Bereiche unterteilt sein.

Alternativ hierzu kann auch vorgesehen sein, dass der verengte Bereich in der Längsrichtung der Lackierkabine nicht unterteilt ist.

Wenn der Applikationsbereich in einer Lackierkabine mit einer Querrichtung angeordnet ist, so kann vorgesehen sein, dass der verengte Bereich in der Querrichtung der Lackierkabine in mehrere verengte Teil-Bereiche unterteilt ist.

Alternativ hierzu kann auch vorgesehen sein, dass der verengte Bereich in der Querrichtung der Lackierkabine nicht unterteilt ist.

Der Eintritt des Abluftstroms in den verengten Bereich ist vorzugsweise oberhalb des mindestens einen regenerierbaren Oberflächenfilters angeordnet.

Wenn der Applikationsbereich in einer Lackierkabine mit einer Querrichtung angeordnet ist, so weist der kleinste von dem Abluftstrom durchströmte Querschnitt des verengten Bereichs vorzugsweise eine Ausdehnung in der Querrichtung der Lackierkabine auf, welche höchstens ungefähr 20 % der Ausdehnung der Lackierkabine in der Querrichtung der Lackierkabine beträgt.

Um das mindestens eine regenerierbare Oberflächenfilter vor Beschädigungen zu schützen, ist es günstig, wenn vertikal über dem mindestens einen regenerierbaren Oberflächenfilter mindestens ein Abschirmelement angeordnet ist, das ein senkrechtes Herabfallen von Gegenständen, Schmutz und/oder Lackpartikeln aus dem Applikationsbereich auf das regenerierbare Oberflächenfilter verhindert.

Dabei ist vorgesehen, dass das mindestens eine Abschirmelement eine Begrenzung des verengten Bereiches bildet.

Um günstige Strömungsverhältnisse im Strömungsweg des Abluftstroms zu erzielen, ist es günstig, dass die Vorrichtung mindestens ein Strömungsleitelement umfasst, das zumindest einen Teil des Abluftstroms zu dem verengten Bereich hin leitet.

Dabei kann das Strömungsleitelement eine zumindest abschnittsweise im wesentlichen horizontal ausgerichtete Strömungsleitfläche aufweisen.

Das Strömungsleitelement weist eine zumindest abschnittsweise gegen die Horizontale, vorzugsweise zu dem verengten Bereich hin, geneigte Strömungsleitfläche auf.

Wenn die Vorrichtung einen Boden aufweist, welcher den Strömungsweg des Abluftstroms nach unten hin begrenzt, so kann vorgesehen sein, dass zumindest ein Teil des Bodens durch einen von dem vom Abluftstrom durchströmten Bereich der Vorrichtung abgetrennten Bereich abgedeckt ist. Auf diese Weise wird die Bodenfläche reduziert, welche durch vor Erreichen des mindestens einen Oberflächenfilters aus dem Abluftstrom abgetrennten Nasslack-Overspray verunreinigt wird. Dabei kann vorgesehen sein, dass eine obere Begrenzungswand des von dem vom Abluftstrom durchströmten Bereich der Vorrichtung abgetrennten Bereichs zumindest einen Teil eines Strömungsleitelements bildet, das zumindest einen Teil des Abluftstroms zu dem verengten Bereich hin leitet.

Wenn der Applikationsbereich in einer Lackierkabine angeordnet ist und die Vorrichtung mindestens einen Abluftkanal umfasst, in welchen zumindest ein Teil des Abluftstroms nach dem Passieren der Abtrennvorrichtung eintritt, so wird ein besonders platzsparender Aufbau der Vorrichtung erzielt, wenn der Abluftkanal innerhalb einer vertikalen Projektion der Grundfläche der Lackierkabine angeordnet ist.

Um das Abreinigen des regenerierbaren Oberflächenfilters zu erleichtern, ist es günstig, wenn das mindestens eine regenerierbare Oberflächenfilter eine ein Precoat-Material umfassende Sperrschicht aufweist, welche ein Verkleben der Filteroberfläche verhindert.

Um die Sperrschicht aus Precoat-Material an dem Oberflächenfilter zu erzeugen, kann vorgesehen sein, dass die Vorrichtung mindestens eine Precoat-Zuführeinrichtung umfasst, welche ein Precoat-Material in den Abluftstrom abgibt.

Dabei kann die Abgabe von Precoat-Material in den Abluftstrom kontinuierlich oder intervallweise erfolgen.

Als Precoat-Materialien kommen beispielsweise Kalk, Aluminiumsilikate, Aluminiumoxide, Siliziumoxide, Pulverlack oder ähnliches in Betracht.

Grundsätzlich ist jedes Medium als Precoat-Material geeignet, das dazu in der Lage ist, den Flüssigkeitsanteil des Nasslack-Oversprays aufzunehmen.

Grundsätzlich kann die Precoat-Zuführeinrichtung beispielsweise unmittelbar vor dem mindestens einen regenerierbaren Oberflächenfilter angeordnet sein.

Ferner ist es möglich, die mindestens eine Precoat-Zuführeinrichtung im unmittelbaren Anschluss an den Applikationsbereich, beispielsweise im Bodenbereich der Lackierkabine, anzuordnen.

Besonders günstig ist es jedoch, wenn die mindestens eine Precoat-Zuführeinrichtung an dem verengten Bereich des Strömungswegs des Abluftstroms angeordnet ist. Im verengten Bereich des Strömungswegs des Abluftstroms herrschen besonders hohe Strömungsgeschwindigkeiten, so dass durch die Zuführung des Precoat-Materials an dieser Stelle eine besonders gute Precoat-Verteilung in dem Abluftstrom durch Venturi-Verwirbelung erzielt wird.

Beim Precoatieren besteht auch die Möglichkeit des Zwischen-Precoatierens, wobei ohne vorheriges Abreinigen des Oberflächenfilters neues Precoat-Material aufgebracht wird, um das spätere Abreinigungsverhalten des Oberflächenfilters zu verbessern.

Das mindestens eine regenerierbare Oberflächenfilter der Abtrennvorrichtung ist vorzugsweise intervallweise abreinigbar.

Alternativ oder ergänzend hierzu kann vorgesehen sein, dass das mindestens eine regenerierbare Oberflächenfilter im Betrieb der Vorrichtung eine feuchte Oberfläche aufweist.

Das Oberflächenfilter kann beispielsweise durch Spül- oder Befeuchtungsmedien wie VE-Wasser, Butylglykol oder andere Lösemittel feucht gehalten werden, um die Abreinigung des Oberflächenfilters zu erleichtern.

Diese Befeuchtungsmedien können an denselben Stellen in den Abluftstrom eingebracht werden wie die vorstehend erläuterten Precoat-Materialien.

Für eine gründliche Abreinigung der Filteroberfläche des Oberflächenfilters ist es günstig, wenn die Oberfläche des mindestens einen regenerierbaren Oberflächenfilters kontinuierlich oder intervallweise abspülbar ist.

Alternativ oder ergänzend hierzu kann vorgesehen sein, dass das mindestens eine regenerierbare Oberflächenfilter durch Druckluftimpulse abreinigbar ist.

Ein besonders energiesparender Betrieb der Lackieranlage wird ermöglicht, wenn die Vorrichtung einen Umluftkreislauf aufweist, in weichem der Abluftstrom, aus welchem der Nasslack-Overspray abgetrennt worden ist, zumindest teilweise erneut dem Applikationsbereich zugeführt wird.

Weitere Merkmale und Vorteile der Erfindung sind Gegenstand der nachfolgenden Beschreibung und der zeichnerischen Darstellung von Ausführungsbeispielen.

In den Zeichnungen zeigen:

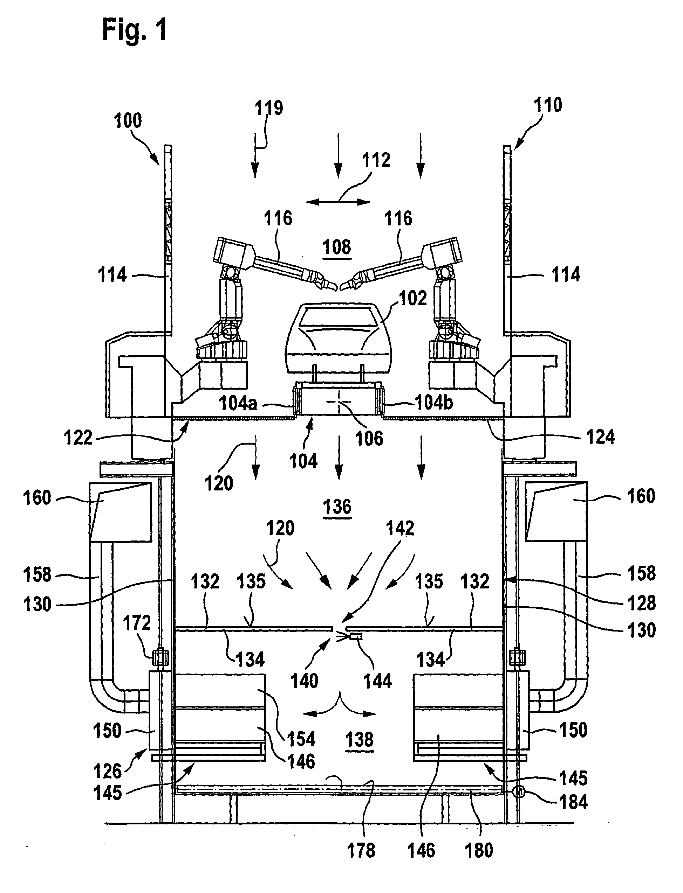

- Fig. 1: einen schematischen vertikalen Querschnitt durch eine erste Aus- führungsform einer Lackierkabine mit einer darunter angeord- neten Vorrichtung zum Abtrennen von Nasslack-Overspray aus einem Overspray-Partikel enthaltenden Abluftstrom, welche zwei Abtrennvorrichtungen zum Abtrennen des Oversprays aus dem Abluftstrom sowie zwei Abluftkanäle umfasst, welche seitlich links bzw. rechts neben dem Grundriss der Lackierkabine verlaufen, wobei zwischen einem Applikationsbereich der Lackierkabine und den Abtrennvorrichtungen ein verengter Bereich des Strömungs- wegs des Abluftstroms vorgesehen ist, welcher durch horizontal ausgerichtete Strömungsleitelemente begrenzt ist;
- Fig. 2: eine schematische Seitenansicht der Anlage aus Fig. 1;
- Fig. 3: eine schematische Draufsicht von oben auf die Anlage aus den Fig. 1 und 2;
- Fig. 4: eine schematische perspektivische Darstellung der Anlage aus den Fig. 1 bis 3;
- Fig. 5: eine schematische Darstellung eines Umluftkreislaufs der Anlage aus den Fig. 1 bis 4;
- Fig. 6: eine schematische perspektivische Darstellung eines regenerier- baren Oberflächenfilters der Anlage aus den Fig. 1 bis 5;
- Fig. 7: einen schematischen Längsschnitt durch das Oberflächenfilter aus Fig. 6, welcher einen Abreinigungsvorgang des Oberflächenfilters illustriert;
- Fig. 8: eine schematische perspektivische Darstellung einer alternativen Ausführungsform eines regenerierbaren Oberflächenfilters;
- Fig. 9: einen schematischen Querschnitt durch das Oberflächenfilter aus Fig. 8, welcher einen Abreinigungsvorgang des Oberflächenfilters illustriert;
- Fig. 10: eine schematische Draufsicht von oben auf das Oberflächenfilter aus den Fig. 8 und 9;

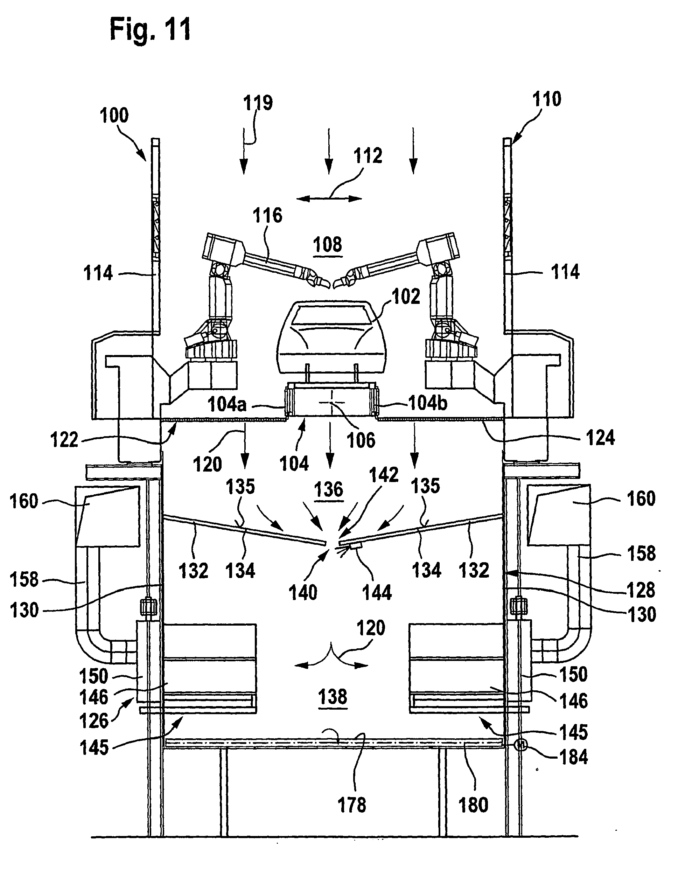

- Fig. 11: einen schematischen Querschnitt durch eine zweite Ausführungs- form einer Lackierkabine mit einer darunter angeordneten Vor- richtung zum Abtrennen von Nasslack-Overspray aus einem Over- spray-Partikel enthaltenden Abluftstrom, welche zwei Abtrennvor- richtungen zum Abtrennen des Oversprays aus dem Abluftstrom und zwei seitlich neben dem Grundriss der Lackierkabine verlau- fende Abluftkanäle umfasst, wobei zwischen einem Applikations- bereich der Lackierkabine und den Abtrennvorrichtungen ein ver- engter Bereich des Strömungswegs des Abluftstroms vorgesehen ist, welcher durch gegen die Horizontale geneigte Strömungs- leitelemente begrenzt ist;
- Fig. 12: eine schematische Seitenansicht der Anlage aus Fig. 11;
- Fig. 13: eine schematische Draufsicht von oben auf die Anlage aus den Fig. 11 und 12;
- Fig. 14: eine schematische perspektivische Darstellung der Anlage aus den Fig. 11 bis 13;

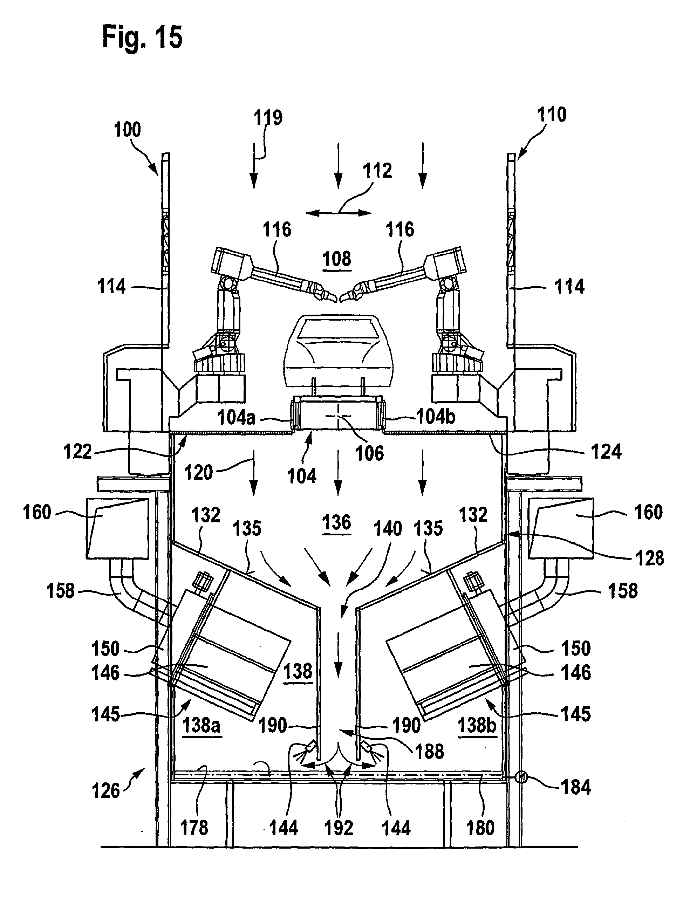

- Fig. 15: einen schematischen Querschnitt durch eine dritte Ausführungs- form einer Lackierkabine mit einer darunter angeordneten Vor- richtung zum Abtrennen von Nasslack-Overspray aus einem Over- spray-Partikel enthaltenden Abluftstrom, welche zwei Abtrennvor- richtungen zum Abtrennen des Oversprays aus dem Abluftstrom und zwei seitlich neben dem Grundriss der Lackierkabine verlau- fende Abluftkanäle umfasst, wobei zwischen einem Applikations- bereich der Lackierkabine und den Abtrenneinrichtungen ein verengter Bereich des Strömungswegs des Abluftstroms in Form eines sich in vertikaler Richtung erstreckenden Schachtes vorge- sehen ist;
- Fig. 16: eine schematische Seitenansicht der Anlage aus Fig. 15;
- Fig. 17: eine schematische Draufsicht von oben auf die Anlage aus den Fig. 15 und 16;
- Fig. 18: eine schematische perspektivische Darstellung der Anlage aus den Fig. 15 bis 17;
- Fig. 19: einen schematischen Querschnitt durch eine vierte Ausführungs- form einer Lackierkabine mit einer darunter angeordneten Vor- richtung zum Abtrennen von Nasslack-Overspray aus einem Over- spray-Partikel enthaltenden Abluftstrom, welche eine Abtrennvor- richtung zum Abtrennen des Oversprays aus dem Abluftstrom und einen innerhalb einer vertikalen Projektion der Grundfläche der Lackierkabine angeordneten Abluftkanal umfasst;
- Fig. 20: eine schematische Seitenansicht der Anlage aus Fig. 19;
- Fig. 21: eine schematische Draufsicht von oben auf die Anlage aus den Fig. 19 und 20; und
- Fig. 22: eine schematische perspektivische Darstellung der Anlage aus den Fig. 19 bis 21.

Gleiche oder funktional äquivalente Elemente sind in allen Figuren mit denselben Bezugszeichen bezeichnet.

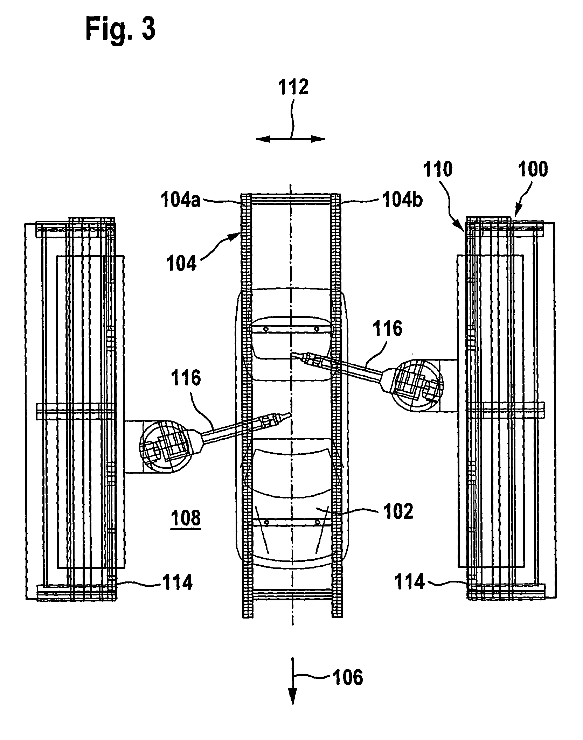

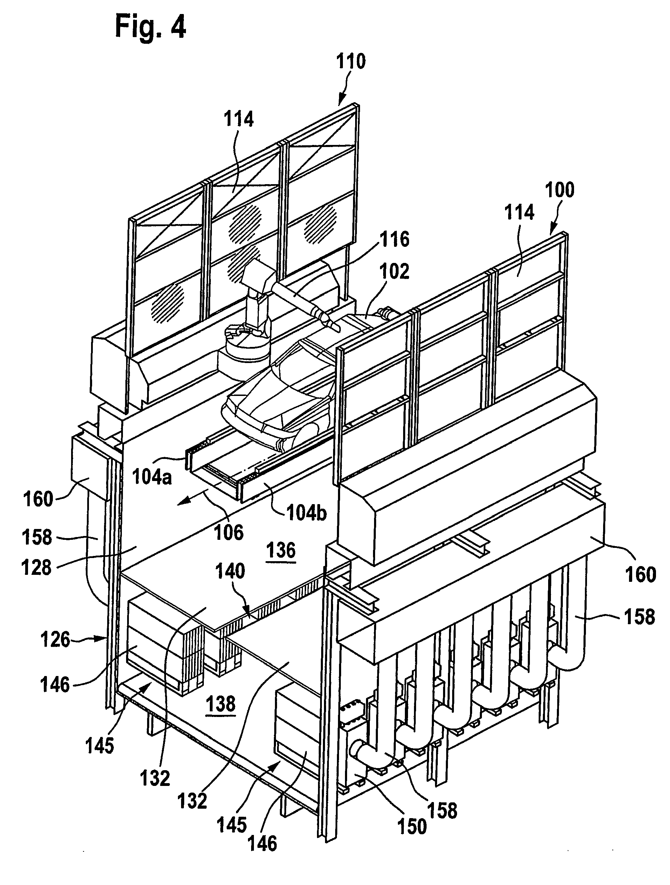

Eine in den Fig. 1 bis 7 dargestellte, als Ganzes mit 100 bezeichnete Anlage zum Spritzlackieren von Fahrzeugkarosserien 102 umfasst eine rein schematisch dargestellte Fördervorrichtung 104, mittels welcher die Fahrzeugkarosserien 102 längs einer Förderrichtung 106 durch einen Applikationsbereich 108 einer als Ganzes mit 110 bezeichneten Lackierkabine bewegt werden können.

Die Fördervorrichtung 104 kann beispielsweise als invertierter Kreisförderer oder auch als invertierter Einschienenförderer ausgebildet sein.

Insbesondere kann die Fördervorrichtung 104 zweiteilig ausgebildet sein und - wie am besten aus den Fig. 1, 3 und 4 zu ersehen ist - zwei sich parallel zur Förderrichtung 106 erstreckende Förderstränge 104a und 104b umfassen, welche in einer zur Förderrichtung 106 senkrechten horizontalen Richtung voneinander beabstandet sind.

Der Applikationsbereich 108 ist der Innenraum der Lackierkabine 110, welche in ihrer senkrecht zur Förderrichtung 106, die der Längsrichtung der Lackierkabine 110 entspricht, verlaufenden horizontalen Querrichtung 112 zu beiden Seiten der Fördervorrichtung 104 durch jeweils eine Kabinenwand 114 begrenzt ist.

Zu beiden Seiten der Fördervorrichtung 104 sind in der Lackierkabine 110 Spritzlackiereinrichtungen 116 (siehe Fig. 1 bis 4) angeordnet, beispielsweise in Form von Lackierrobotern.

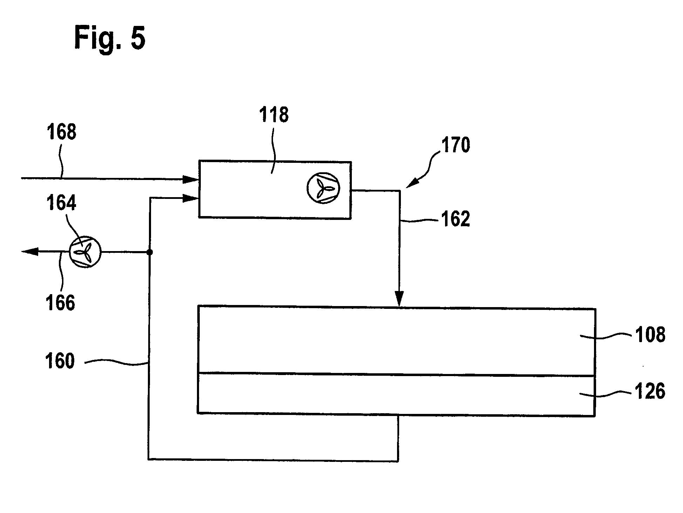

Mittels einer in Fig. 5 schematisch dargestellten Luftstromerzeugungseinrichtung 118 wird ein Luftstrom erzeugt, welcher den Applikationsbereich 108 im wesentlichen vertikal von oben nach unten durchsetzt, wie dies in Fig. 1. durch die Pfeile 119 angedeutet ist.

Dieser Luftstrom nimmt im Applikationsbereich 108 Lack-Overspray in Form von Overspray-Partikeln auf.

Der Begriff "Partikel" umfasst dabei sowohl feste als auch flüssige Teilchen, insbesondere Tröpfchen.

Wird in der Anlage 100 ein Nasslack zum Lackieren verwendet, so besteht der Nasslack-Overspray aus Lacktröpfchen.

Die meisten der Overspray-Partikel weisen eine größte Abmessung im Bereich von ungefähr 1 µm bis ungefähr 100 µm auf.

Der durch die Pfeile 120 dargestellte Abluftstrom verläßt die Lackierkabine 110 durch einen Kabinenboden 122, welcher durch luftdurchlässige Gitterroste 124 gebildet ist.

Die Anlage 100 umfasst ferner eine als Ganzes mit 126 bezeichnete Vorrichtung zum Abtrennen von Nasslack-Overspray aus dem Luftstrom 120, welche unterhalb des Applikationsbereichs 108 angeordnet ist.

Die Vorrichtung 126 umfasst eine im wesentlichen quaderförmige Strömungskammer 128, welche sich in der Förderrichtung 106 über die ganze Länge der Lackierkabine 110 hinweg erstreckt und in der Querrichtung 112 der Lackierkabine 110 durch vertikale Seitenwände 130 begrenzt ist, die im wesentlichen mit den seitlichen Kabinenwänden 114 der Lackierkabine 110 fluchten, so dass die Strömungskammer 128 im wesentlichen dieselbe horizontale Querschnittsfläche aufweist wie die Lackierkabine 110 und im wesentlichen vollständig innerhalb der vertikalen Projektion der Grundfläche der Lackierkabine 110 angeordnet ist.

Die Strömungskammer 128 ist durch Strömungsleitelemente 132, welche in diesem Ausführungsbeispiel als im wesentlichen horizontal ausgerichtete Strömungsleitbleche 134 ausgebildet sind, in einen oberen Abschnitt 136 und einen unteren Abschnitt 138 unterteilt.

Der obere Abschnitt 136 und der untere Abschnitt 138 der Strömungskammer 128 sind durch einen verengten Bereich 140 miteinander verbunden, welcher die Form eine Spaltes 142 zwischen den einander gegenüberliegenden freien Rändern der Strömungsleitelemente 132 aufweist und eine Engstelle im Strömungsweg des Abluftstroms 120 durch die Strömungskammer 128 bildet.

Die Oberseiten der Strömungsleitelemente 132 bilden jeweils eine Strömungsleitfläche 135, welche den Abluftstrom 120 zu dem verengten Bereich 140 hin leitet.

Am verengten Bereich 140 des Strömungsweges ist eine Precoat-Zuführeinrichtung 144 angeordnet, welche kontinuierlich oder intervallweise ein Precoat-Material in den Abluftstrom 120 abgibt.

Die Precoat-Zuführeinrichtung 144 kann beispielsweise als eine Precoat-Sprühdüse ausgebildet sein, welche das Precoat-Material in Form eines Sprühnebels in den Abluftstrom 120 abgibt.

Die Anordnung der Precoat-Zuführeinrichtung 144 an dem verengten Bereich 140 des Strömungsweges des-Abluftstroms 120 bietet den Vorteil, dass-dort aufgrund der erhöhten Strömungsgeschwindigkeit des Abluftstroms 120 und aufgrund des kleinen Durchtrittsquerschnittes Turbulenzen in der Abluftströmung entstehen, welche für eine Verwirbelung des Precoat-Materials in dem Abluftstrom 120 und somit für eine besonders gute Verteilung des Precoat-Materials in dem Abluftstrom 120 sorgen.

Die Precoat-Zuführeinrichtung 144 ist an eine (nicht dargestellte) Precoat-Zuführleitung angeschlossen, welche das Precoat-Material in fließfähigem Zustand mittels einer (nicht dargestellten) Precoat-Zuführpumpe aus einem (nicht dargestellten) Precoat-Speicherbehälter zuführt.

Als Precoat-Material kann grundsätzlich jedes Medium verwendet werden, welches dazu in der Lage ist, den Flüssigkeitsanteil des Nasslack-Oversprays aufzunehmen.

Insbesondere kommen als Precoat-Materialien beispielsweise Kalk, Aluminiumsilikate, Aluminiumoxide, Siliziumoxide, Pulverlack oder ähnliches in Betracht.

Um das Precoat-Material fließfähig und sprühbar zu machen, werden beispielsweise wäßrige Dispersionen der genannten Materialien verwendet.

Wenn die auf die Precoat-Zuführeinrichtung 144 folgenden Filter nicht precoated, sondern lediglich befeuchtet werden sollen, kann mittels der Precoat-Zuführeinrichtung 144 auch lediglich ein Befeuchtungsmedium in den Abluftstrom 120 eingebracht werden.

Als solche Befeuchtungsmedien kommen insbesondere beispielsweise VE-Wasser, Butylglykol oder andere Lösungsmittel in Betracht.

Im unteren Abschnitt 138 der Strömungskammer 128 ist zu beiden Seiten des verengten Bereichs 140 jeweils eine Abtrennvorrichtung 145 zum Abtrennen von Nasslack-Overspray aus dem Abluftstrom 120 vorgesehen. Die Abtrennvorrichtungen 145 umfassen jeweils mehrere, an den beiden einander gegenüberliegenden vertikalen Seitenwänden 130 der Strömungskammer 128 angeordnete, in der Förderrichtung 106 voneinander beabstandete regenerierbare Oberflächenfilter 146, welche mit ihren Filterelementen 148 in den unteren Abschnitt 138 der Strömungskammer 128 hineinragen (siehe insbesondere die Fig. 1, 2 und 4).

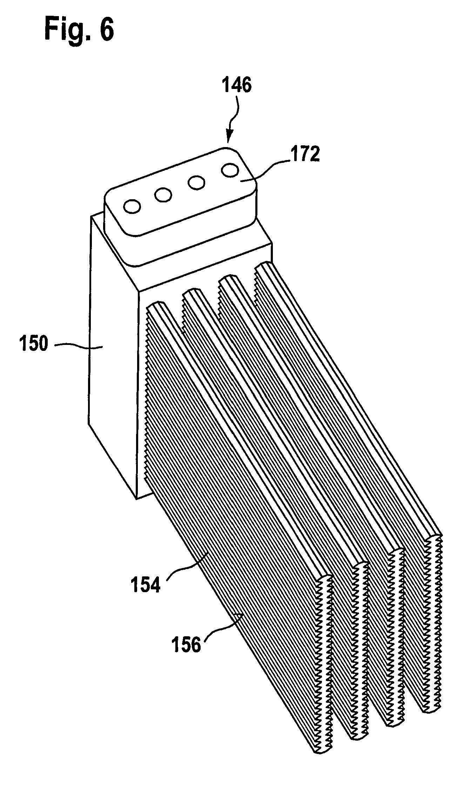

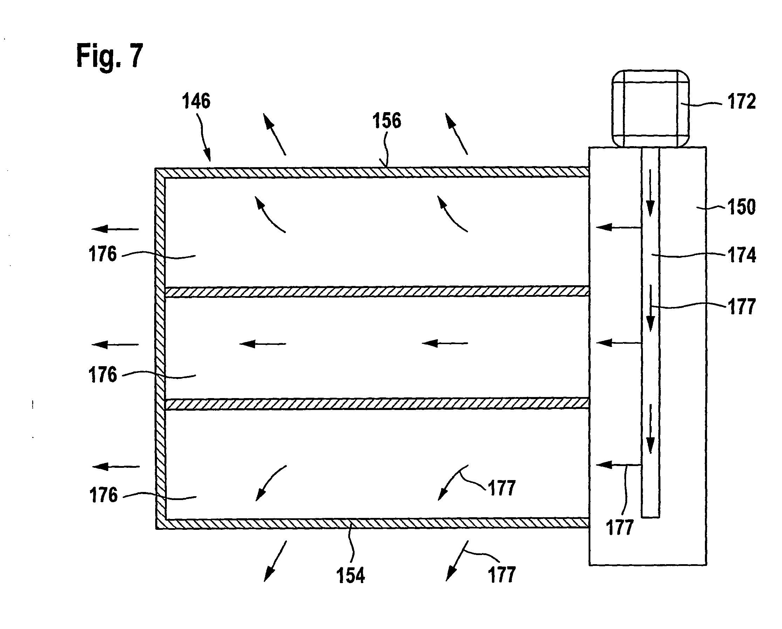

Eines dieser regenerierbaren Oberflächenfilter 146 ist in den Fig. 6 und 7 im Detail dargestellt.

Jedes der regenerierbaren Oberflächenfilter 146 umfasst einen hohl ausgebildeten Grundkörper 150, an welchem mehrere, beispielsweise jeweils vier, Filterelemente 154 gehalten sind.

Die Filterelemente 154 sind beispielsweise im wesentlichen plattenförmig ausgebildet und weisen, wie aus Fig. 6 zu ersehen ist, vorzugsweise einen gezackten Querschnitt auf, um die zur Verfügung stehende Filteroberfläche 156 zu vergrößern.

Die Filterelemente 154 können beispielsweise als Platten aus gesintertem Polyethlyen, die an ihrer Außenfläche mit einer Membran aus Polytetrafluorethylen (PTFE) versehen sind, ausgebildet sein.

Alternativ oder ergänzend hierzu kann auch vorgesehen sein, dass die Filterelemente 154 aus einem Vliesstoff mit einer PTFE-Beschichtung gebildet sind. Die Beschichtung aus PTFE dient jeweils dazu, die Filterklasse des Oberflächenfilters 146 zu erhöhen (d.h. dessen Durchlässigkeit zu verringern) und ferner das permanente Anhaften des aus dem Abluftstrom 120 abgetrennten Nasslack-Oversprays zu verhindern.

Sowohl das Grundmaterial der Filterelemente 154 als auch deren PTFE-Beschichtung weisen eine Porosität auf, so dass die Abluft durch die Poren in den Innenraum 176 des jeweiligen Filterelements 154 gelangen kann.

Um das Verkleben der Filteroberfläche 156 zu verhindern, ist dieselbe ferner mit einer Sperrschicht aus dem in den Abluftstrom abgegebenen Precoat-Material versehen.

Diese Sperrschicht bildet sich im Betrieb der Vorrichtung 126 einfach durch Abscheidung des in den Abluftstrom 120 abgegebenen Precoat-Materials an der Filteroberfläche 156.

Vorzugsweise wird die Menge des in den Abluftstrom 120 abgegebenen Precoat-Materials so bemessen, dass die Dicke der Sperrschicht aus dem Precoat-Material auf den Filterelementen 154 der regenerierbaren Oberflächenfilter 146 im Bereich von beispielsweise ungefähr 150 µm bis 200 µm liegt.

Der Abluftstrom 120 überstreicht die Filteroberflächen 156 der Filterelemente 154 des regenerierbaren Oberflächenfilters 146, wobei sowohl das mitgeführte Precoat-Material als auch der mitgeführte Nasslack-Overspray an den Filteroberflächen 156 abgeschieden werden, und gelangt durch die porösen Fiiteroberfiächen 156 in die Innenräume 176 der Filterelemente 154, die mit dem Hohlraum innerhalb des Grundkörpers 150 verbunden sind.

Der gereinigte Abluftstrom 120 gelangt somit durch den Grundkörper 150 in jeweils ein Abluftrohr 158, welches von dem jeweiligen regenerierbaren Oberflächenfilter 146 zu einem seitlich neben einer vertikalen Seitenwand 130 der Strömungskammer 128 parallel zur Förderrichtung 106 verlaufenden Abluftkanal 160 führt.

Wie aus der schematischen Darstellung der Fig. 5 zu ersehen ist, gelangt die von dem Nasslack-Overspray gereinigte Abluft aus den beiden Abluftkanälen 160 zumindest teilweise zurück zu der Luftstromerzeugungseinrichtung 118, welche die gereinigte Abluft über eine Zuführleitung 162 erneut dem Applikationsbereich 108 in der Lackierkabine 110 zuführt.

Ein anderer Teil des gereinigten Abluftstroms wird über ein Abluftgebläse 164 in einer Abluftleitung 166 an die Umgebung abgegeben.

Dieser an die Umgebung abgegebene Teil des Abluftstroms wird durch Frischluft ersetzt, welche der Luftstromerzeugungseinrichtung 118 über eine Frischluftzuführleitung 168 zugeführt wird.

Der Großteil der durch den Applikationsbereich 108 hindurchgeführten Luft wird somit in einem Umluftkreislauf 170 geführt, welcher die Luftstromerzeugungseinrichtung 118, die Zuführleitung 162, den Applikationsbereich 108, die Strömungskammer 128 und die Abluftkanäle 160 umfasst, wodurch eine ständige Aufheizung frisch zugeführter Zuluft vermieden und somit die Energiekosten deutlich gesenkt werden.

Da die Abtrennung des Nasslack-Oversprays aus dem Abluftstrom 120 mittels der regenerierbaren Oberflächenfilter 146 trocken, d.h. ohne Auswaschung mit einer Reinigungsflüssigkeit, erfolgt, wird die im Umluftkreislauf 170 geführte Luft beim Abtrennen des Nasslack-Oversprays nicht befeuchtet, so dass auch keinerlei Vorrichtungen zur Entfeuchtung der im Umluftkreislauf 170 geführten Luft erforderlich sind.

Ferner sind auch keine Vorrichtungen zur Abtrennung von Nasslack-Overspray aus einer Auswasch-Reinigungsflüssigkeit erforderlich.

Die regenerierbaren Oberflächenfilter 146 werden in bestimmten Zeitintervallen, wenn ihre Beladung mit Nasslack-Overspray ein vorgegebenes Maß erreicht hat, durch Druckluftimpulse abgereinigt.

Diese Abreinigung kann beispielsweise einmal pro Arbeitsschicht, d.h. zweimal bis dreimal pro Arbeitstag, erfolgen.

Die erforderlichen Druckluftimpulse werden mittels eines Druckluftspeichers 172 erzeugt, welcher an dem Grundkörper 150 des jeweiligen regenerierbaren Oberflächenfilters 146 angeordnet ist und dazu in der Lage ist, Druckluftimpulse an Druckluftrohre 174 abzugeben, welche innerhalb des jeweiligen Grundkörpers 150 verlaufen und von dem Druckluftspeicher 172 in die Innenräume 176 der Filterelemente 154 führen.

Von den Innenräumen 176 der Filterelemente 154 gelangen die Druckluftimpulse durch die porösen Filteroberflächen 156 in den Außenraum der Filterelemente 154, wobei die an den Filteroberflächen 156 gebildete Sperrschicht aus Precoat-Material und dem daran abgeschiedenen Nasslack-Overspray von den Filteroberflächen 156 abgelöst wird, so dass die Filteroberflächen 156 in ihren abgereinigten Ursprungszustand zurückversetzt werden. Die Strömungsrichtung der Druckluft durch ein regenerierbares Oberflächenfilter 146 beim Abreinigen ist in Fig. 7 durch die Pfeile 177 dargestellt.

Der Druckluftvorrat in den Druckluftspeichern 172 wird über (nicht dargestellte) Druckluftzuführleitungen aus einem bauseitig vorhandenen Druckluftnetz ergänzt.

Alternativ oder ergänzend zu einer Abreinigung durch Druckluftimpulse kann auch vorgesehen sein, dass die regenerierbaren Oberflächenfilter 146 mittels einer geeigneten Spüleinrichtung in vorgegebenen Intervallen abgespült werden, um den an den Filteroberflächen 156 abgeschiedenen Nasslack-Overspray zu entfernen.

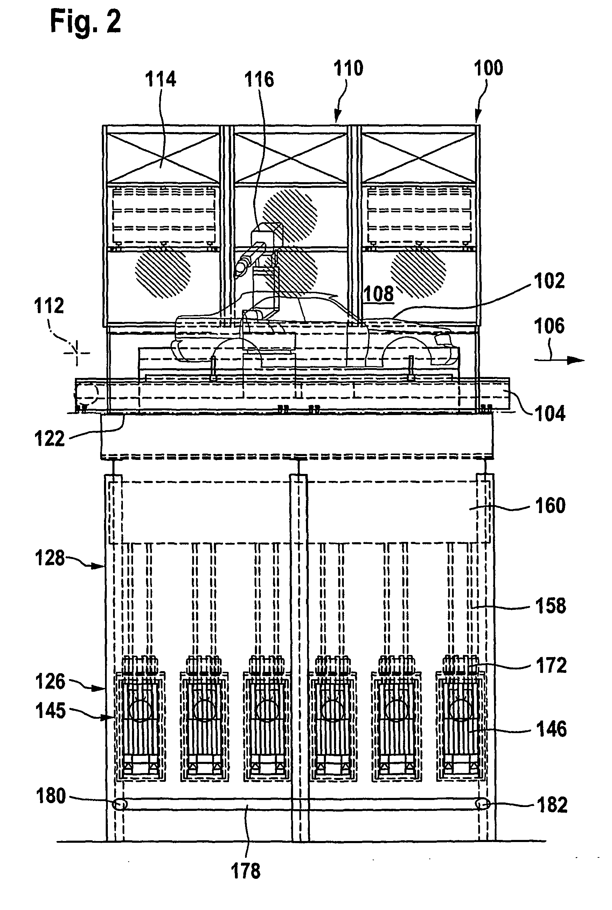

Wie am besten aus den Fig. 1 und 2 zu ersehen ist, gelangt das von den Filteroberflächen 156 der regenerierbaren Oberflächenfilter 146 abgereinigte Material auf ein am Boden der Strömungskammer 128 angeordnetes Sammelband 178, das beispielsweise als ein über eine angetriebene Rolle 180 und eine nicht angetriebene Umlenkrolle 182 umlaufendes, endloses Band ausgebildet ist.

Die angetriebene Rolle 180 wird mittels eines Antriebsmotors 184 in Drehung versetzt, um das Sammelband 178 längs der Förderrichtung 106 in Bewegung zu versetzen.

Auf diese Weise wird mittels des Sammelbandes 178 das von den regenerierbaren Oberflächenfiltern 146 auf die Oberfläche des Sammelbands 178 gelangte Material, welches Precoat-Material und abgeschiedenen Nasslack-Overspray umfasst, zu einer (nicht dargestellten) Abscheidevorrichtung transportiert, von welcher dieses Material (beispielsweise mittels Abstreifern) von dem Sammelband 178 gelöst, gesammelt und gegebenenfalls einer Weiterverwendung zugeführt wird.

Das Sammelband 178 nimmt auch einen Teil des Nasslack-Oversprays auf, welcher direkt aus dem Abluftstrom 120 auf das Sammelband 178 gelangt, bevor der Abluftstrom 120 die regenerierbaren Oberflächenfilter 146 erreicht.

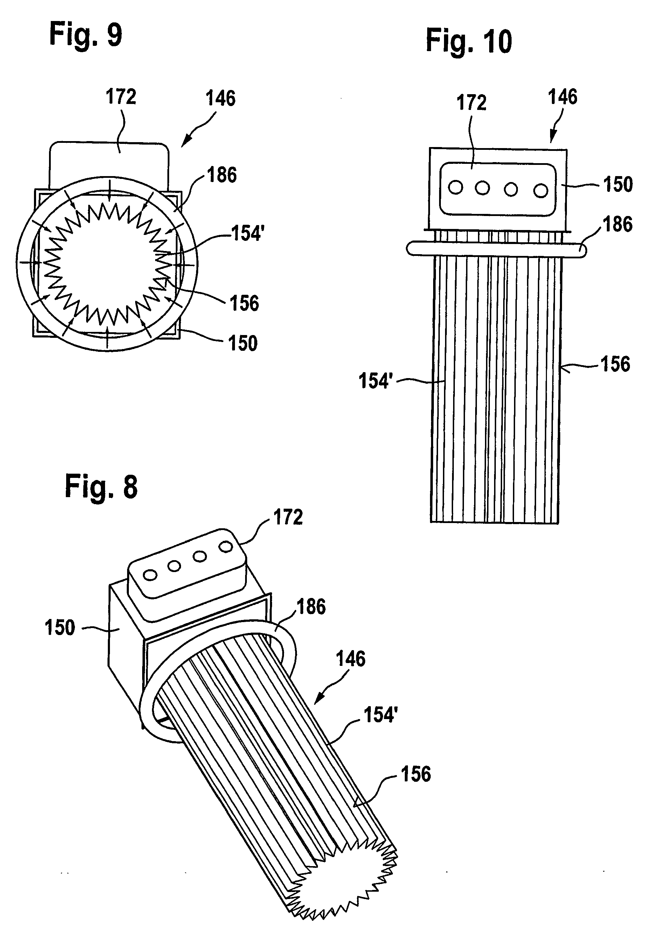

Eine alternative Ausgestaltung der regenerierbaren Oberflächenfilter 146, welche in der Vorrichtung 126 verwendbar sind, ist in den Fig. 8 bis 10 dargestellt.

Das in den Fig. 8 bis 10 dargestellte regenerierbare Oberflächenfilter 146 umfasst statt einer Mehrzahl vertikal ausgerichteter, nebeneinander angeordneter plattenförmiger Filterelemente ein im wesentlichen zylindrisches Filterelement 154', das zur Vergrößerung der zur Verfügung stehenden Filteroberfläche 156 ebenfalls eine im Querschnitt gesehen gezackte Filteroberfläche 156 aufweist.

Zusätzlich zur Erzeugung der Druckluftimpulse ist zur Abreinigung des regenerierbaren Oberflächenfilters 146 bei dieser Ausführungsform eine Spülflüssigkeits-Ringleitung 186 vorgesehen, welche eine Spülflüssigkeit durch an der radialen Innenseite der Spülflüssigkeits-Ringleitung 186 vorgesehene Spülflüssigkeits-Austrittsöffnungen gegen die Filteroberfläche 156 des Filterelements 154' spritzt, so dass die Spülflüssigkeit die Sperrschicht und den daran abgeschiedenen Nasslack-Overspray von der Filteroberfläche 156 ablöst und auf das Sammelband 178 befördert.

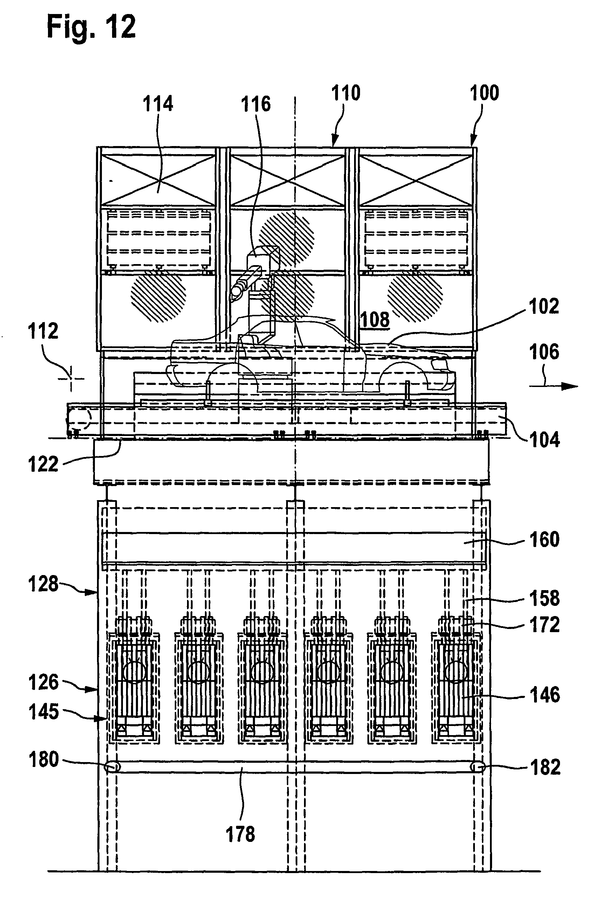

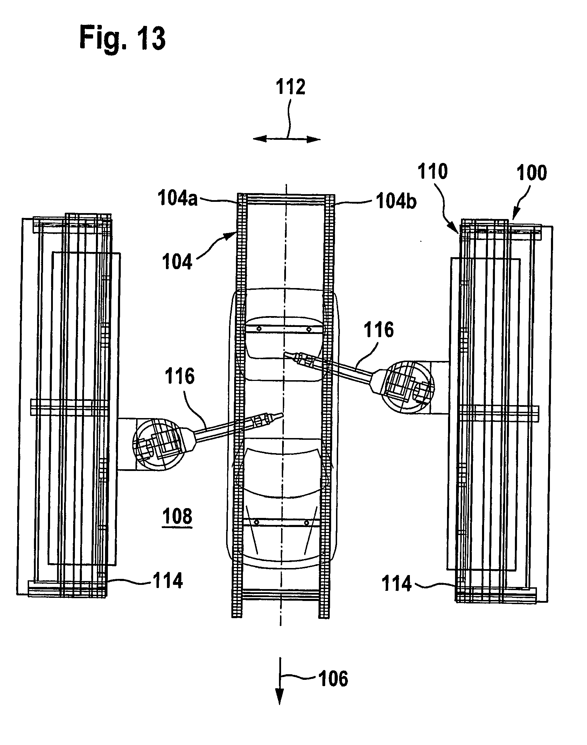

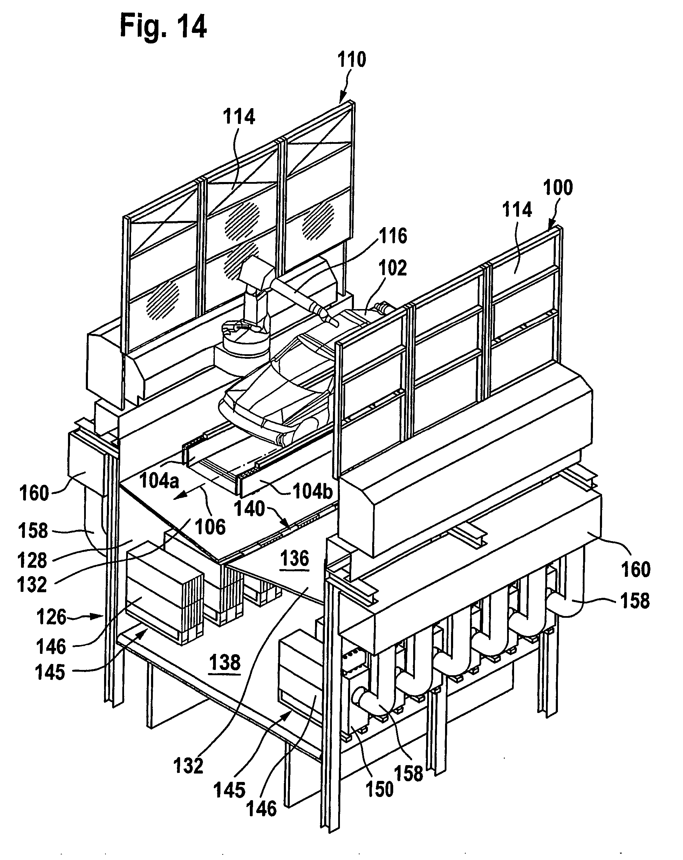

Eine in den Fig. 11 bis 14 dargestellte zweite Ausführungsform einer Anlage 100 zum Lackieren von Fahrzeugkarosserien 102 unterscheidet sich von der vorstehend beschriebenen ersten Ausführungsform dadurch, dass die Strömungsleitelemente 132, welche den unteren Abschnitt 138 von dem oberen Abschnitt 136 der Strömungskammer 128 der Vorrichtung 126 zum Abtrennen von Nasslack-Overspray trennen, bei dieser zweiten Ausführungsform nicht, wie bei der ersten Ausführungsform, im wesentlichen horizontal ausgerichtet sind, sondern, wie am besten aus Fig. 11 zu ersehen ist, so gegen die Horizontale geneigt sind, dass sie zu dem verengten Bereich 140 hin abfallen.

Der Neigungswinkel gegen die Horizontale beträgt vorzugsweise ungefähr 5° bis ungefähr 30°.

Durch diese Neigung der Strömungsleitelemente 132 und damit der Strömungsleitflächen 135 an deren Oberseite wird eine trichterförmige Gestalt des unteren Bereichs des oberen Abschnitts 136 der Strömungskammer 128 erzielt, durch welche die Luftströmung zu dem verengten Bereich 140 hin vergleichmäßigt wird und das Ausmaß von Verwirbelungen an der Oberseite der Strömungsleitelemente 132 reduziert wird. Auf diese Weise wird ein geringerer Anteil des Nasslack-Oversprays bereits an den Strömungsteltflächen 135 abgeschieden, bevor der Abluftstrom 120 den unteren Abschnitt 138 der Strömungskammer 128 erreicht.

Ferner sind die Strömungsleitelemente 132 bei der zweiten Ausführungsform etwas höher innerhalb der Strömungskammer 128 angeordnet als bei der ersten Ausführungsform.

Im übrigen stimmt die in den Fig. 11 bis 14 dargestellte zweite Ausführungsform einer Anlage 100 zum Lackieren von Fahrzeugkarosserien 102 hinsichtlich Aufbau und Funktion mit der in den Fig. 1 bis 10 dargestellten ersten Ausführungsform überein, auf deren vorstehende Beschreibung insoweit Bezug genommen wird.

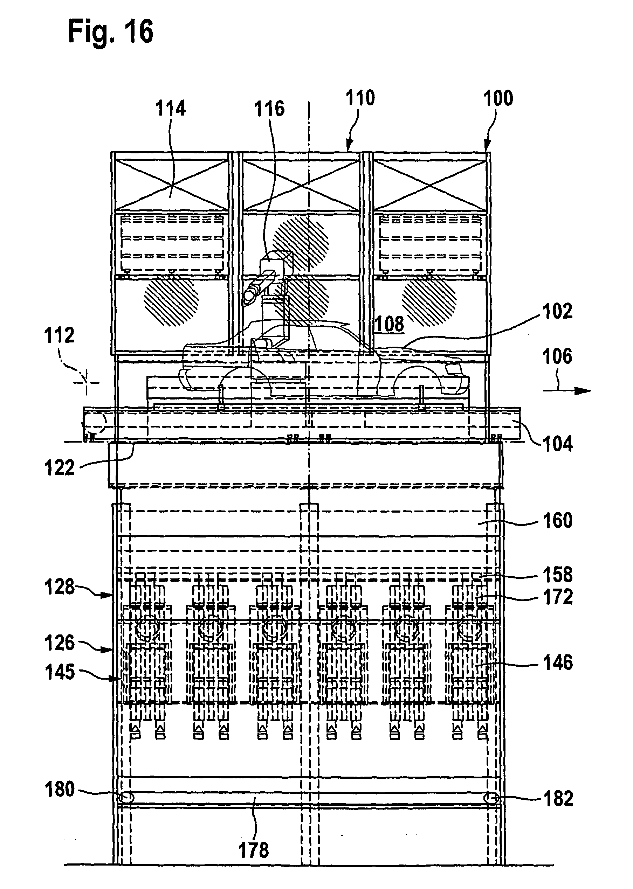

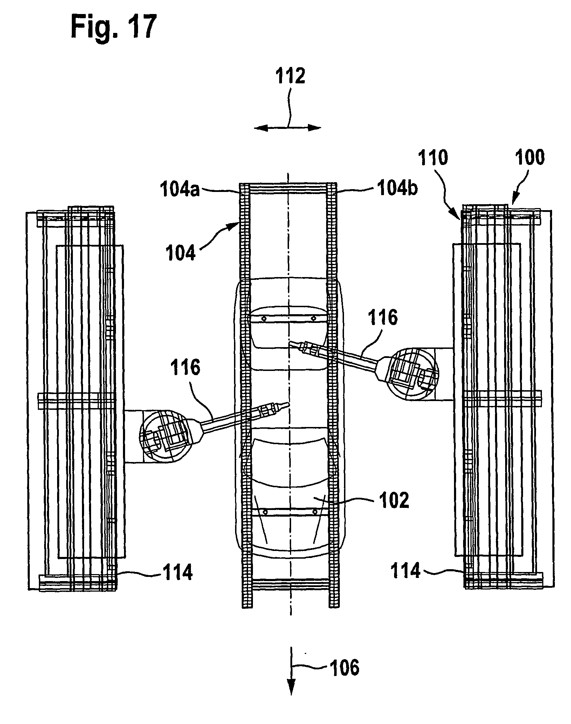

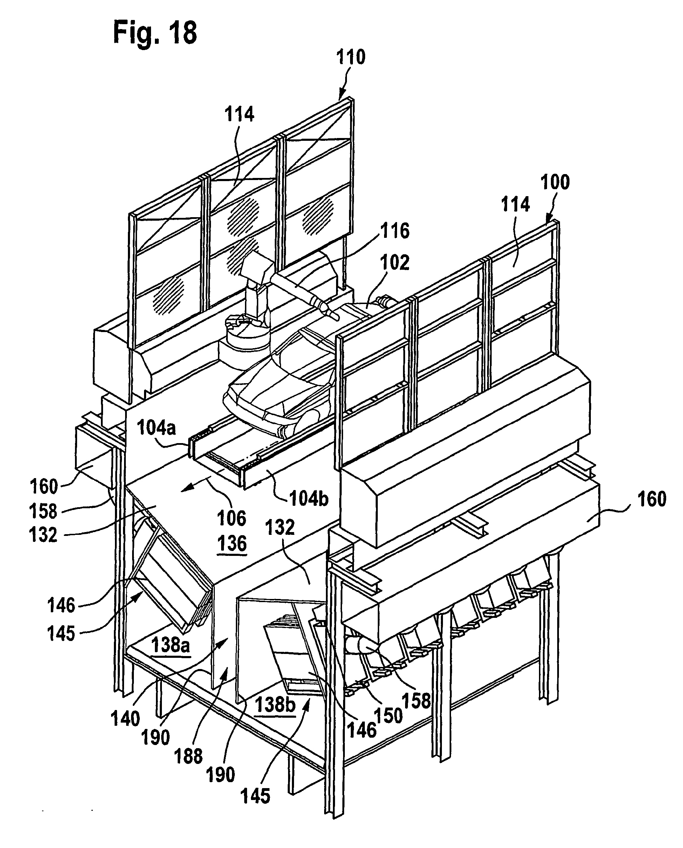

Eine in den Fig. 15 bis 18 dargestellte dritte Ausführungsform einer Anlage 100 zum Lackieren von Fahrzeugkarosserien 102 unterscheidet sich von der vorstehend beschriebenen zweiten Ausführungsform dadurch, dass der verengte Bereich 140 nicht lediglich durch einen Spalt 142 zwischen den einander gegenüberliegenden Rändern der Strömungsleitelemente 132 gebildet ist, sondern einen sich von den einander gegenüberliegenden Rändern der Strömungsleitelemente 132 aus vertikal nach unten erstreckenden Abluftschacht 188 umfasst, der auf seinen beiden Längsseiten durch vertikale, sich in der Förderrichtung 106 erstreckende Schachtseitenwände 190 begrenzt ist.

Zwischen dem unteren Rand jeder Schachtseitenwand 190 und der Oberseite des Sammelbandes 178 am Boden der Strömungskammer 128 ist jeweils ein vertikaler Spalt 192 ausgebildet, durch welchen der Abluftstrom 120 aus dem verengten Bereich 140 in den unteren Abschnitt 138 der Strömungskammer 128 austritt, wobei der untere Abschnitt 138 der Strömungskammer 128 bei dieser Ausführungsform in zwei jeweils auf einer Seite des Abluftschachtes 188 angeordnete Teilbereiche 138a, 138b unterteilt ist.

Ferner erstrecken sich bei dieser Ausführungsform die Filterelemente 154 der regenerierbaren Oberflächenfilter 146 nicht in im wesentlichen horizontaler Richtung in den unteren Abschnitt 138 der Strömungskammer 128 hinein, sondern sind vielmehr gegen die Horizontale geneigt, und zwar vorzugsweise um ungefähr denselben Winkel wie die Strömungsleitflächen 135 der Strömungsleitelemente 132.

Dieser Neigungswinkel gegenüber der Horizontalen liegt vorzugsweise im Bereich von ungefähr 5° bis ungefähr 30°.

Aufgrund dieser Neigung der Filterelemente 154 der regenerierbaren Oberflächenfilter 146 gegenüber der Horizontalen sind auch die Grundkörper 150 der regenerierbaren Oberflächenfilter 146 und die oberen Bereiche der Seitenwände 130 des unteren Abschnitts 138 der Strömungskammer 128 nicht vertikal ausgerichtet, sondern gegen die Vertikale um einen spitzen Winkel geneigt, welcher dem Neigungswinkel der Filterelemente 154 und der Strömungsleitflächen 135 gegenüber der Horizontalen entspricht.

Bei dieser Ausführungsform sind die regenerierbaren Oberflächenfilter 146 besonders gut gegenüber aus dem Applikationsbereich 108 herabfallenden Gegenständen geschützt.

Außerdem sind durch den Abluftschacht 188 der obere Abschnitt 136 und der untere Abschnitt 138 der Strömungskammer 128 strömungstechnisch voneinander entkoppelt, so dass die Abluftströmung im unteren Abschnitt 138 der Strömungskammer 128 weitgehend von den Strömungsverhältnissen im oberen Abschnitt 136 der Strömungskammer 128 unabhängig ist.

Da bei dieser Ausführungsform zwei Spalte 192 vorhanden sind, durch welche der Abluftstrom 120 in den unteren Abschnitt 138 der Strömungskammer 128 eintritt, sind auch zwei Precoat-Zuführeinrichtungen 144 vorgesehen, welche jeweils benachbart zu einem der vertikalen Spalte 192 am unteren Ende einer der Schachtseitenwände 190 angeordnet sind.

Im übrigen stimmt die in den Fig. 15 bis 18 dargestellte dritte Ausführungsform einer Anlage 100 zum Lackieren von Fahrzeugkarosserien 102 hinsichtlich Aufbau und Funktion mit der in den Fig. 11 bis 14 dargestellten zweiten Ausführungsform überein, auf deren vorstehende Beschreibung insoweit Bezug genommen wird.

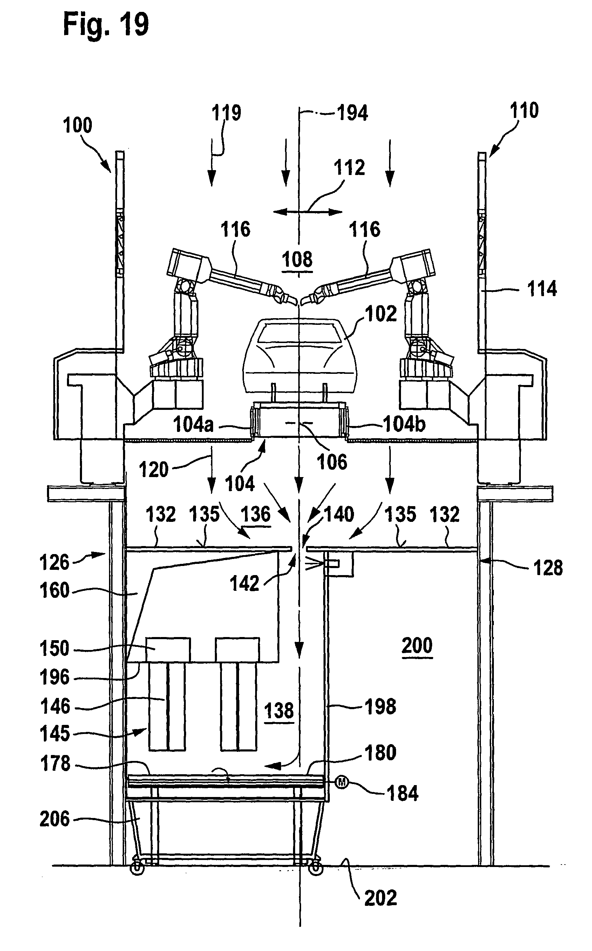

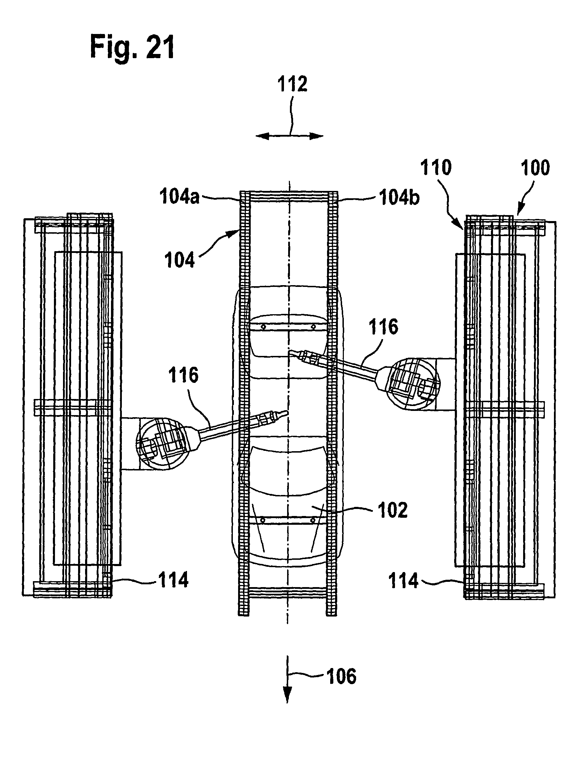

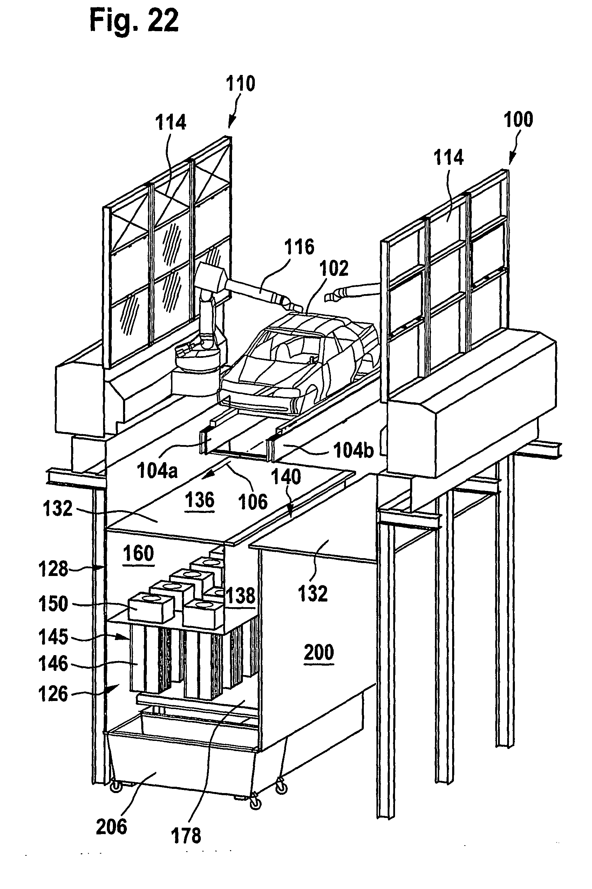

Eine in den Fig. 19 bis 22 dargestellte vierte Ausführungsform einer Anlage 100 zum Spritzlackieren von Fahrzeugkarosserien 102 unterscheidet sich von der vorstehend beschriebenen ersten Ausführungsform dadurch, dass die Vorrichtung 126 zum Abtrennung von Nasslack-Overspray aus dem Abluftstrom 120 nicht symmetrisch zur Längsmittelebene 194 der Lackierkabine 110 ausgebildet ist, sondern asymmetrisch zu dieser Längsmittelebene 194.

Insbesondere sind die regenerierbaren Oberflächenfilter 146 bei dieser Ausführungsform nur auf einer Seite der Längsmittelebene 194 angeordnet (nämlich auf der in Fig. 19 links dargestellten Seite).

Bei dieser Ausführungsform ist nur ein einziger Abluftkanal 160 vorgesehen, welcher überdies nicht seitlich außerhalb der Seitenwand 130 der Strömungskammer 128 angeordnet ist, sondern statt dessen in die Strömungskammer 128 integriert und direkt unter einem der Strömungsleitelemente 132 angeordnet ist, so dass das betreffende Strömungsleitelement 132 eine obere Begrenzung des Abluftkanals 160 bildet.

Die regenerierbaren Oberflächenfilter 146 sind bei dieser Ausführungsform nicht über Abluftrohre 158 mit dem Abluftkanal 160 verbunden, sondern direkt an einer unteren Begrenzungswand 196 des Abluftkanals 160 angeordnet, wobei die Filterelemente 154 der regenerierbaren Oberflächenfilter 146 in im wesentlichen vertikaler Richtung von der unteren Begrenzungswand 196 des Abluftkanal 160 in den unteren Abschnitt 138 der Strömungskammer 128 herabhängen.

Durch diese hängende Anordnung wird eine besonders effiziente Abreinigung der regenerierbaren Oberflächenfilter 146 erzielt.

Die der mit den regenerierbaren Oberflächenfiltern 146 versehenen Seite der Strömungskammer 128 gegenüberliegende Seite des unteren Abschnitts 138 der Strömungskammer 128 ist durch eine vertikale Trennwand 198 von dem vom Abluftstrom 120 durchströmten Bereich des unteren Abschnitts 138 der Strömungskammer 128 abgetrennt.

Dieser abgetrennte Bereich 200 ist nach oben hin durch eines der Strömungsleitelemente 132 begrenzt und erstreckt sich nach unten hin bis zum Boden 202 der Strömungskammer 128.

Dieser vom durchströmten Bereich der Strömungskammer 128 abgetrennte Bereich 200 kann beispielsweise zur Aufnahme von Hilfseinrichtungen, wie Gebläsen, Speicherbehältern, Pumpen oder ähnlichem genutzt werden.

Alternativ oder ergänzend hierzu ist es möglich, den abgetrennten Bereich 200 als Luftkanal, beispielsweise als zusätzlichen Abluftkanal, Frischluftzuführkanal oder Abluftabführkanal, zu nutzen.

Der durchströmte Bereich des unteren Abschnitts 138 der Strömungskammer 128 wird nach unten durch das Sammelband 178 begrenzt.

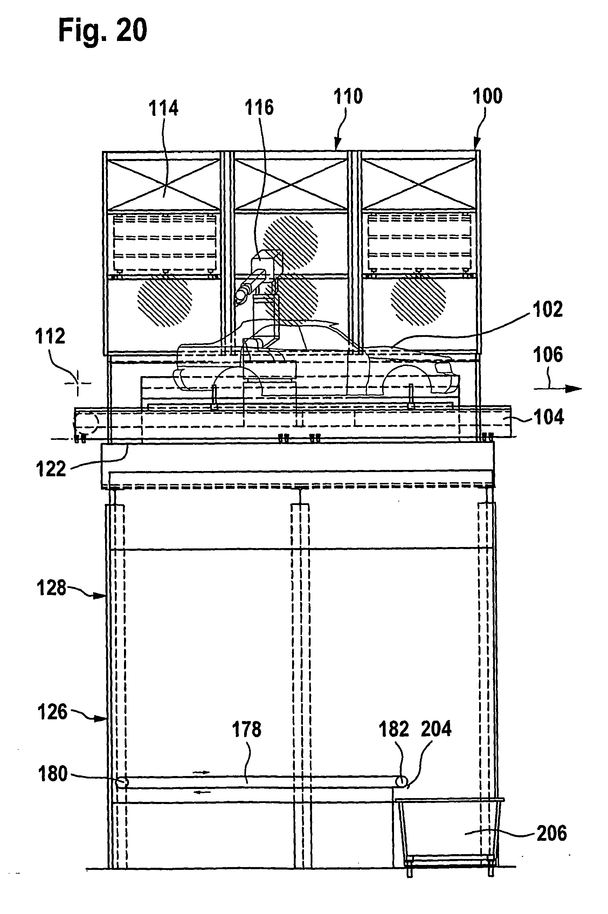

Insbesondere aus Fig. 20 ist zu ersehen, dass das Sammelband 178 im Bereich seiner nicht angetriebenen Umlenkrolle 182 mittels eines Abstreifers 204 von dem auf der Oberfläche des Sammelbandes 178 gesammelten Material, welches Precoat-Material und abgeschiedenen Nasslack-Overspray enthält, gereinigt wird, wobei das von dem Sammelband 178 abgestreifte Material in einen fahrbaren Sammelbehälter 206 gelangt.

Wenn in dem fahrbaren Sammelbehälter 206 ein vorgegebener Höchstfüllstand erreicht ist, wird der fahrbare Sammelbehälter 206 gegen einen leeren fahrbaren Sammelbehälter 206 ausgetauscht, und der befüllte fahrbare Sammelbehälter 206 wird zu einer (nicht dargestellten) Sammel- und Weiterverwertungsstation gefahren.

Da bei der in den Fig. 19 bis 22 dargestellten vierten Ausführungsform sämtliche Bestandteile der Vorrichtung 126 zum Abtrennen von Nasslack-Overspray innerhalb der vertikalen Projektion der Grundfläche der Lackierkabine 110 angeordnet sind, baut diese Ausführungsform besonders kompakt und ist besonders bei beengten Platzverhältnissen geeignet.

Im übrigen stimmt die in den Fig. 19 bis 22 dargestellte vierte Ausführungsform hinsichtlich Aufbau und Funktion mit der in den Fig. 1 bis 10 dargestellten ersten Ausführungsform überein, auf deren vorstehende Beschreibung insoweit Bezug genommen wird.

## Patentansprüche

1. Anlage zum Lackieren von Gegenständen, insbesondere von Fahrzeugkarosserien (102), umfassend mindestens eine Lackierkabine (110) und mindestens eine Vorrichtung (126) zum Abtrennen von Nasslack-Overspray aus einem Overspray-Partikel enthaltenden Abluftstrom (120), wobei die Overspray-Partikel in einem Applikationsbereich (108) der Lackieranlage (100) in den Abluftstrom (120) gelangen,
wobei die Vorrichtung (126)
a) mindestens eine Strömungskammer (128) umfasst, die im Wesentlichen innerhalb der vertikalen Projektion der Grundfläche der Lackierkabine (110) angeordnet ist, und
b) mindestens eine Abtrennvorrichtung zum Abtrennen des Oversprays aus zumindest einem Teil des Abluftstroms (120) umfasst, welche mindestens ein regenerierbares Filter (146) aufweist,
wobei der Strömungsweg des Abluftstroms (120) von dem Applikationsbereich (108) zu der Abtrennvorrichtung (145) mindestens einen verengten Bereich (140) aufweist, der unterhalb des Applikationsbereiches (108) innerhalb einer vertikalen Projektion der Grundfläche der Lackierkabine (110) und innerhalb der Strömungskammer (128) angeordnet ist,
**dadurch gekennzeichnet,**
**dass** vertikal über dem mindestens einen regenerierbaren Filter (146) mindestens ein Abschirmelement (132) angeordnet ist, das
- eine Begrenzung des verengten Bereiches (140) bildet sowie
- ein Strömungsleitelement mit einer zumindest abschnittsweise gegen die Horizontale geneigten Strömungsleitfläche (135) bildet.

2. Anlage nach Anspruch 1, **dadurch gekennzeichnet, dass** der Applikationsbereich (108) in einer Lackierkabine (110) mit einer Längsrichtung (106) angeordnet ist und dass
der verengte Bereich (140) sich in der Längsrichtung (106) der Lackierkabine (110) über im Wesentlichen die gesamte Länge der Lackierkabine (110) erstreckt und/oder
der verengte Bereich (140) in der Längsrichtung (106) der Lackierkabine (110) in mehrere verengte Teil-Bereiche unterteilt ist.

3. Anlage nach einem der Ansprüche 1 oder 2, **dadurch gekennzeichnet, dass** der Eintritt des Abluftstroms (120) in den verengten Bereich (140) oberhalb des mindestens einen regenerierbaren Filters (146) angeordnet ist.

4. Anlage nach einem der Ansprüche 1 bis 3, **dadurch gekennzeichnet, dass** der Applikationsbereich (108) in einer Lackierkabine (110) mit einer Querrichtung (112) angeordnet ist und dass der kleinste von dem Abluftstrom (120) durchströmte Querschnitt des verengten Bereichs (140) eine Ausdehnung in der Querrichtung (112) der Lackierkabine (110) aufweist, welche höchstens ungefähr 20 % der Ausdehnung der Lackierkabine (110) in der Querrichtung (112) der Lackierkabine (110) beträgt.

5. Anlage nach einem der Ansprüche 1 bis 4, **dadurch gekennzeichnet, dass** vertikal über dem mindestens einen regenerierbaren Filter (146) mindestens ein Abschirmelement (132) angeordnet ist, das ein senkrechtes Herabfallen von Gegenständen, Schmutz und/oder Lackpartikeln aus dem Applikationsbereich (108) auf das regenerierbare Filter (146) verhindert.

6. Anlage nach einem der Ansprüche 1 bis 5, **dadurch gekennzeichnet, dass** die Vorrichtung (126) mindestens ein Strömungsleitelement (132) umfasst, das zumindest einen Teil des Abluftstroms (120) zu dem verengten Bereich (140) hin leitet.

7. Anlage nach Anspruch 6, **dadurch gekennzeichnet, dass** das Strömungsleitelement (132) eine zumindest abschnittsweise im wesentlichen horizontal ausgerichtete Strömungsleitfläche (135) aufweist.

8. Anlage nach einem der Ansprüche 1 bis 7, **dadurch gekennzeichnet, dass** die Vorrichtung (126) einen Boden (202) aufweist, welcher den Strömungsweg des Abluftstroms (120) nach unten hin begrenzt, und dass zumindest ein Teil des Bodens (202) durch einen von dem vom Abluftstrom (120) durchströmten Bereich der Vorrichtung (126) abgetrennten Bereich (200) abgedeckt ist.

9. Anlage nach Anspruch 8, **dadurch gekennzeichnet, dass** eine obere Begrenzungswand des von dem vom Abluftstrom (120) durchströmten Bereich der Vorrichtung (126) abgetrennten Bereichs (200) zumindest einen Teil eines Strömungsleitelements (132) bildet, das zumindest einen Teil des Abluftstroms (120) zu dem verengten Bereich (140) hin leitet.

10. Anlage nach einem der Ansprüche 1 bis 9, **dadurch gekennzeichnet, dass** der Applikationsbereich (108) in der Lackierkabine (110) angeordnet ist und dass die Vorrichtung (126) mindestens einen Abluftkanal (160) umfasst, in welchen zumindest ein Teil des Abluftstroms (120) nach dem Passieren der Abtrennvorrichtung (145) eintritt, wobei der Abluftkanal (160) innerhalb einer vertikalen Projektion der Grundfläche der Lackierkabine (110) angeordnet ist.

11. Anlage nach einem der Ansprüche 1 bis 10, **dadurch gekennzeichnet, dass** das mindestens eine regenerierbare Filter (146) als ein Oberflächenfilter (146) ausgebildet ist, das
a) im Betrieb der Vorrichtung (126) eine feuchte Oberfläche aufweist, die kontinuierlich oder intervallweise abspülbar ist, und/oder
b) eine ein Precoat-Material umfassende Sperrschicht aufweist, welche ein Verkleben der Filteroberfläche (156) verhindert.

12. Anlage nach einem der Ansprüche 1 bis 11, **dadurch gekennzeichnet, dass** die Vorrichtung mindestens eine Precoat-Zuführeinrichtung (144) umfasst, mittels welcher ein Precoat-Material kontinuierlich oder intervallweise in den Abluftstrom (120) abgebbar ist.

13. Anlage nach Anspruch 12, **dadurch gekennzeichnet, dass** mindestens eine Precoat-Zuführeinrichtung (144) im Bodenbereich der Lackierkabine (110) angeordnet ist.

14. Anlage nach einem der Ansprüche 12 oder 13, **dadurch gekennzeichnet, dass** mindestens eine Precoat-Zuführeinrichtung (144) an dem verengten Bereich (140) des Strömungswegs des Abluftstroms (120) angeordnet ist.

15. Anlage nach einem der Ansprüche 1 bis 14, **dadurch gekennzeichnet, dass** die Vorrichtung (126) eine Einrichtung (172, 174) zum intervallweisen Abreinigen des mindestens einen regenerierbaren Filters (146) durch Druckluftimpulse umfasst.

16. Anlage nach einem der Ansprüche 1 bis 15, **dadurch gekennzeichnet, dass** die Vorrichtung (126) einen Umluftkreislauf (170) aufweist, in welchem der Abluftstrom (120), aus welchem der Nasslack-Overspray

17. Anlage nach einem der Ansprüche 1 bis 16, **dadurch gekennzeichnet, dass** der verengte Bereich (140) einen sich von den einander gegenüberliegenden Rändern von Strömungsleitelementen (132) aus vertikal nach unten erstreckenden Abluftschacht (188) umfasst, der auf seinen beiden Längsseiten durch sich in einer Förderrichtung (106) erstreckende Schachtseitenwände (119) begrenzt ist.

18. Anlage nach einem der Ansprüche 1 bis 17, **dadurch gekennzeichnet, dass** der Strömungsweg des Abluftstroms (120) von dem Applikationsbereich (108) zu der Abtrennvorrichtung (145) mindestens einen verengten Bereich (140) aufweist, wobei die mittlere Strömungsrichtung des Abluftstroms (120) beim Passieren des verengten Bereichs (140) im Wesentlichen erhalten bleibt.

19. Anlage nach einem der Ansprüche 1 bis 18, **dadurch gekennzeichnet, dass** die Vorrichtung (126) eine Längsmittelebene (194) aufweist, bezüglich derer die Vorrichtung (126) insbesondere **dadurch** asymmetrisch ausgestaltet ist, dass nur auf einer Seite der Längsmittelebene (194) Filter (146) angeordnet sind.

20. Anlage nach Anspruch 19, **dadurch gekennzeichnet, dass** die der mit den regenerierbaren Filtern (146) versehenen Seite der Strömungskammer (128) gegenüberliegende Seite der Strömungskammer (128) durch eine vertikale Trennwand (198) von dem vom Abluftstrom (120) durchströmten Bereich der Strömungskammer (128) abgetrennt ist, wodurch sich ein abgetrennter Bereich (200) ergibt, der nach oben hin durch eines der Strömungsleitelemente (132) begrenzt ist und sich nach unten hin bis zu einem Boden (202) der Strömungskammer (128) erstreckt.

21. Anlage nach Anspruch 20, **dadurch gekennzeichnet, dass** in dem abge-trennten Bereich (200) Hilfseinrichtungen der Vorrichtung (126) in Form von Gebläsen, Speicherbehältern und/oder Pumpen vorgesehen sind.

22. Anlage nach einem der Ansprüche 19 bis 21, **dadurch gekennzeichnet, dass** auf der mit den regenerierbaren Filtern (146) versehenen Seite der Strömungskammer (128) ein Abluftkanal (160) vorgesehen ist, der in die Strömungskammer (128) integriert und direkt unter einem der Strömungsleitelemente (132) angeordnet ist, so dass das betreffende Strömungsleitelement (132) eine obere Begrenzung des Abluftkanals (160) bildet.

23. Anlage nach Anspruch 22, **dadurch gekennzeichnet, dass** die regenerierbaren Filter (146) an einer unteren Begrenzungswand (196) des Abluftkanals (160) angeordnet sind, wobei Filterelemente (154) der Filter (146) in im Wesentlichen vertikaler Richtung von der unteren Begrenzungswand (196) des Abluftkanals (160) in einen unteren Abschnitt (138) der Strömungskammer (128) herabhängen.

24. Anlage nach einem der Ansprüche 1 bis 23, **dadurch gekennzeichnet, dass** der durchströmte Bereich der Strömungskammer (128) nach unten durch ein Sammelband (178) begrenzt wird, das Material sammelt, welches Precoat-Material und abgeschiedenen Nasslack-Overspray enthält.

## Claims

1. Installation for painting objects, in particular vehicle bodies (102), comprising at least one painting cabin (110) and at least one device (126) for separating wet paint overspray from an exhaust air flow (120) containing overspray particles, wherein the overspray particles pass into the exhaust air flow (120) in an application area (108) of the painting installation (100), wherein the device (126)
a) comprises at least one flow chamber (128) arranged substantially within the vertical projection of the floor space of the painting cabin (110), and
b) has at least one separation device for separating the overspray from at least a part of the exhaust air flow (120), which has at least one regenerable filter (146),
wherein the flow path of the exhaust air flow (120) from the application area (108) to the separation device (145) has at least one constricted area (140), which is arranged below the application area (108) within a vertical projection of the floor space of the painting cabin (110) and within the flow chamber (128),
**characterised in that**
at least one shielding element (132) is arranged vertically above the at least one regenerable filter (146), which
• forms a boundary of the constricted area (140) and also
• forms a flow guide element with a flow guide surface (135) inclined relative to the horizontal at least in sections.

2. Installation according to claim 1, **characterised in that** the application area (108) is arranged in a painting cabin (110) with a longitudinal direction (106), and that the constricted area (140) extends in the longitudinal direction (106) of the painting cabin (110) over substantially the entire length of the painting cabin (110), and/or the constricted area (140) is subdivided in the longitudinal direction (106) of the painting cabin (110) into a plurality of constricted sub-areas.

3. Installation according to one of claims 1 or 2, **characterised in that** the entry of the exhaust air flow (120) into the constricted area (140) is arranged above the at least one regenerable filter (146).

4. Installation according to one of claims 1 to 3, **characterised in that** the application area (108) is arranged in a painting cabin (110) with a transverse direction (112), and that the smallest cross-section of the constricted area (140) passed through by the exhaust air flow (120) has an extent in the transverse direction (112) of the painting cabin (110), which at most amounts to approximately 20% of the extent of the painting cabin (110) in the transverse direction (112) of the painting cabin (110).

5. Installation according to one of claims 1 to 4, **characterised in that** arranged vertically above the at least one regenerable filter (146) is at least one shielding element (132), which prevents objects, dirt and/or paint particles from falling vertically out of the application area (108) onto the regenerable filter (146).

6. Installation according to one of claims 1 to 5, **characterised in that** the device (126) comprises at least one flow guide element (132), which directs at least a part of the exhaust air flow (120) towards the constricted area (140).

7. Installation according to claim 6, **characterised in that** the flow guide element (132) has a flow guide surface (135), which is oriented substantially horizontally at least in sections.

8. Installation according to one of claims 1 to 7, **characterised in that** the device (126) has a base (202), which delimits the flow path of the exhaust air flow (120) downwards, and that at least a part of the base (202) is covered by a region (200) separated from the region of the device (126) passed through by the exhaust air flow (120).

9. Installation according to claim 8, **characterised in that** an upper boundary wall of the region (200) separated from the region of the device (126) passed through by the exhaust air flow (120) forms at least a part of a flow guide element (132), which directs at least a part of the exhaust air flow (120) towards the constricted area (140).

10. Installation according to one of claims 1 to 9, **characterised in that** the application area (108) is arranged in the painting cabin (110), and that the device (126) comprises at least one exhaust air duct (160), into which at least a part of the exhaust air flow (120) enters after passing through the separation device (145), wherein the exhaust air duct (160) is arranged within a vertical projection of the floor space of the painting cabin (110).

11. Installation according to one of claims 1 to 10, **characterised in that** the at least one regenerable filter (146) is configured as a surface filter (146), which
a) has a moist surface during operation of the device (126), which can be rinsed off continuously or at intervals, and/or
b) has a barrier layer comprising a precoat material, which prevents an agglutination of the filter surface (156).

12. Installation according to one of claims 1 to 11, **characterised in that** the device has at least one precoat feeding means (144), by means of which a precoat material can be discharged into the exhaust air flow (120) continuously or at intervals.

13. Installation according to claim 12, **characterised in that** at least one precoat feeding means (144) is arranged in the floor region of the painting cabin (110).

14. Installation according to one of claims 12 or 13, **characterised in that** at least one precoat feeding means (144) is arranged at the constricted area (140) of the flow path of the exhaust air flow (120).

15. Installation according to one of claims 1 to 14, **characterised in that** the device (126) has a means (172, 174) for cleaning the at least one regenerable filter (146) at intervals by compressed air pulses.

16. Installation according to one of claims 1 to 15, **characterised in that** the device (126) has a recirculation circuit (170), in which the exhaust air flow (120), from which the wet paint overspray has been separated, is fed at least partially to the application area (108) again.

17. Installation according to one of claims 1 to 16, **characterised in that** the constricted area (140) comprises an exhaust air shaft (188), which extends vertically downwards from the opposing edges of the flow guide elements (132) and is delimited on its two longitudinal sides by shaft side walls (119) extending in a transport direction (106).

18. Installation according to one of claims 1 to 17, **characterised in that** the flow path of the exhaust air flow (120) from the application area (108) to the separation device (145) has at least one constricted area (140), wherein the average flow direction of the exhaust air flow (120) is substantially retained when passing through the constricted area (140).

19. Installation according to one of claims 1 to 18, **characterised in that** the device (126) has a longitudinal central plane (194), in relation to which the device (126) is configured asymmetrically in particular as a result of filters (146) only being arranged on one side of the longitudinal central plane (194).

20. Installation according to claim 19, **characterised in that** the side of the flow chamber (128) opposite the side of the flow chamber (128) provided with the regenerable filters (146) is separated by means of a vertical dividing wall (198) from the region of the flow chamber (128) passed through by the exhaust air flow (120), which results in a separated region (200), which is delimited upwards by one of the flow guide elements (132) and extends downwards as far as a base (202) of the flow chamber (128).

21. Installation according to claim 20, **characterised in that** auxiliary units of the device (126) in the form of fans, storage containers and/or pumps are provided in the separated region (200).

22. Installation according to one of claims 19 to 21, **characterised in that** on the side of the flow chamber (128) provided with the regenerable filters (146) there is provided an exhaust air duct (160), which is integrated into the flow chamber (128) and is arranged directly below one of the flow guide elements (132), so that the respective flow guide element (132) forms an upper boundary of the exhaust air duct (160).

23. Installation according to claim 22, **characterised in that** the regenerable filters (146) are arranged on a lower boundary wall (196) of the exhaust air duct (160), wherein filter elements (154) of the filters (146) hang down in a substantially vertical direction from the lower boundary wall (196) of the exhaust air duct (160) into a lower section (138) of the flow chamber (128).

24. Installation according to one of claims 1 to 23, **characterised in that** the throughflow region of flow chamber (128) is delimited downwards by a collection belt (178), which collects material containing precoat material and separated wet paint overspray.

## Revendications

1. Installation pour la peinture d'objets, en particulier de carrosseries de véhicules (102), comprenant au moins une cabine d'application de peinture (110) et au moins un dispositif (126) pour la séparation de l'excédent de peinture liquide d'un courant d'évacuation d'air (120) contenant des particules d'excédent de peinture, lesdites particules d'excédent de peinture parvenant dans le courant d'évacuation d'air (120) dans une zone d'application (108) de l'installation d'application de peinture (100), le dispositif (126)
a) comprenant au moins un compartiment d'écoulement (128), disposé sensiblement à l'intérieur de la projection verticale de la surface de base de la cabine d'application de peinture (110), et
b) comprenant au moins un dispositif de séparation destiné à séparer l'excédent de peinture d'au moins une partie du courant d'évacuation d'air (120), lequel est pourvu d'au moins un filtre régénérable (146),
la voie d'écoulement du courant d'évacuation d'air (120) de la zone d'application (108) au dispositif de séparation (145) présentant au moins une zone rétrécie (140), disposée en dessous de la zone d'application (108) à l'intérieur d'une projection verticale de la surface de base de la cabine d'application de peinture (110) et à l'intérieur du compartiment d'écoulement (128), **caractérisée en ce qu'**au moins un élément de protection (132) est disposé verticalement au-dessus du au moins un filtre régénérable (146), lequel
- forme une délimitation de la zone rétrécie (140) et
- forme un élément conducteur d'écoulement avec une surface conductrice d'écoulement (135) au moins partiellement inclinée par rapport à l'horizontale.

2. Installation selon la revendication 1, **caractérisée**
■ **en ce que** la zone d'application (108) est disposée dans une cabine d'application de peinture (110) avec une direction longitudinale (106) et
■ en ce que la zone rétrécie (140) s'étend dans la direction longitudinale (106) de la cabine d'application de peinture (110) sur sensiblement toute la longueur de la cabine d'application de peinture (110) et/ou
■ en ce que la zone rétrécie (140) est divisée en plusieurs zones partielles rétrécies dans la direction longitudinale (106) de la cabine d'application de peinture (110).

3. Installation selon l'une des revendications 1 ou 2, **caractérisée en ce que** l'entrée du courant d'évacuation d'air (120) dans la zone rétrécie (140) est disposée au-dessus du au moins un filtre régénérable (146).

4. Installation selon l'une des revendications 1 à 3, **caractérisée en ce que** la zone d'application (108) est disposée dans une cabine d'application de peinture (110) avec une direction transversale (112) et **en ce que** la plus petite section transversale parcourue par le courant d'évacuation d'air (120) de la zone rétrécie (140) présente une extension dans la direction transversale (112) de la cabine d'application de peinture (110), laquelle correspond au maximum à quelque 20 % de l'extension de la cabine d'application de peinture (110) dans la direction transversale (112) de la cabine d'application de peinture (110).

5. Installation selon l'une des revendications 1 à 4, **caractérisée en ce qu'**au moins un élément de protection (132) est disposé verticalement au-dessus du au moins un filtre régénérable (146), lequel empêche une chute verticale d'objets, d'impuretés et/ou de particules de peinture de la zone d'application (108) sur le filtre régénérable (146).

6. Installation selon l'une des revendications 1 à 5, **caractérisée en ce que** le dispositif (126) comprend au moins un élément conducteur d'écoulement (132) qui conduit au moins une partie du courant d'évacuation d'air (120) vers la zone rétrécie (140).

7. Installation selon la revendication 6, **caractérisée en ce que** l'élément conducteur d'écoulement (132) présente une surface conductrice d'écoulement (135) orientée sensiblement horizontalement, au moins en partie.

8. Installation selon l'une des revendications 1 à 7, **caractérisée en ce que** le dispositif (126) présente un fond (202) qui délimite la voie d'écoulement du courant d'évacuation d'air (120) vers le bas, et **en ce qu'**au moins une partie du fond (202) est recouverte par une zone (200) séparée de la zone du dispositif (126) traversée par le courant d'évacuation d'air (120).

9. Installation selon la revendication 8, **caractérisée en ce qu'**une paroi de délimitation supérieure de la zone (200) séparée de la zone du dispositif (126) traversée par le courant d'évacuation d'air (120) forme au moins une partie d'un élément conducteur d'écoulement (132) qui conduit au moins une partie du courant d'évacuation d'air (120) vers la zone rétrécie (140).

10. Installation selon l'une des revendications 1 à 9, **caractérisée en ce que** la zone d'application (108) est disposée dans une cabine d'application de peinture (110) et **en ce que** le dispositif (126) comporte au moins un canal d'évacuation d'air (160), dans lequel au moins une partie du courant d'évacuation d'air (120) pénètre après passage par le dispositif de séparation (145), ledit canal d'évacuation d'air (160) étant disposé à l'intérieur d'une projection verticale de la surface de base de la cabine d'application de peinture (110).

11. Installation selon l'une des revendications 1 à 10, **caractérisée en ce que** le au moins un filtre régénérable (146) est réalisé comme filtre de surface (146), lequel
a) présente une surface humide pendant le fonctionnement du dispositif (126), laquelle peut être rincée de manière continue ou par intervalles, et/ou
b) présente une couche d'arrêt comportant un matériau de sous-couche qui empêche un collage de la surface de filtre (156).

12. Installation selon l'une des revendications 1 à 11, **caractérisée en ce que** le dispositif comporte au moins un dispositif d'amenée de sous-couche (144) au moyen duquel un matériau de sous-couche peut être refoulé de manière continue ou par intervalles dans le courant d'évacuation d'air (120).

13. Installation selon la revendication 12, **caractérisé en ce qu'**au moins un dispositif d'amenée de sous-couche (144) est disposé au niveau du fond de la cabine d'application de peinture (110).

14. Installation selon l'une des revendications 12 ou 13, **caractérisée en ce qu'**au moins un dispositif d'amenée de sous-couche (144) est disposé sur la zone rétrécie (140) de la voie d'écoulement du courant d'évacuation d'air (120).

15. Installation selon l'une des revendications 1 à 14, **caractérisée en ce que** le dispositif (126) comprend un système (172, 172) pour le nettoyage par intervalles du au moins un filtre régénérable (146) par pulsions d'air comprimé.

16. Installation selon l'une des revendications 1 à 15, **caractérisée en ce que** le dispositif (126) présente un circuit de circulation d'air (170), dans lequel le courant d'évacuation d'air (120), duquel l'excédent de peinture liquide a été séparé, est au moins partiellement reconduit vers la zone d'application (108).

17. Installation selon l'une des revendications 1 à 16, **caractérisée en ce que** la zone rétrécie (140) comprend une trémie d'évacuation d'air (188) s'étendant verticalement vers le bas depuis les bords opposés des éléments conducteurs d'écoulement (132), laquelle est délimitée sur ses deux longueurs par des parois latérales de trémie (119) qui s'étendent dans une direction de transport (106).

18. Installation selon l'une des revendications 1 à 17, **caractérisée en ce que** la voie d'écoulement du courant d'évacuation d'air (120) comporte au moins une zone rétrécie (140) de la zone d'application (108) au dispositif de séparation (145), la direction centrale d'écoulement du courant d'évacuation d'air (120) restant sensiblement maintenue lors du passage par la zone rétrécie (140).

19. Installation selon l'une des revendications 1 à 18, **caractérisée en ce que** le dispositif (126) présente un plan longitudinal médian (194) par rapport auquel le dispositif (126) est configuré notamment de manière asymétrique, de sorte que les filtres (146) ne sont disposés que d'un côté du plan longitudinal médian (194).

20. Installation selon la revendication 19, **caractérisée en ce que** le côté du compartiment d'écoulement (128) opposé au côté du compartiment d'écoulement (128) pourvu des filtres régénérables (146) est séparé par une paroi de séparation verticale (198) de la zone du compartiment d'écoulement (128) traversée par le courant d'évacuation d'air (120), ce qui permet d'obtenir une zone séparée (200) délimitée par un des éléments conducteurs d'écoulement (132) sur le haut, et qui s'étend vers le bas jusqu'à un fond (202) du compartiment d'écoulement (128).

21. Installation selon la revendication 20, **caractérisée en ce que** des équipements auxiliaires du dispositif (126) sont prévus dans la zone séparée (200), sous la forme de soufflantes, de récipients de stockage et/ou de pompes.

22. Installation selon l'une des revendications 19 à 21, **caractérisée en ce qu'**un canal d'évacuation d'air (160) est prévu sur le côté du compartiment d'écoulement (128) pourvu des filtres régénérables (146), lequel est intégré au compartiment d'écoulement (128) et directement disposé sous un des éléments conducteurs d'écoulement (132), de telle manière que l'élément conducteur d'écoulement (132) concerné forme une limite supérieure du canal d'évacuation d'air (160).

23. Installation selon la revendication 22, **caractérisée en ce que** les filtres régénérables (146) sont disposés sur une paroi de délimitation inférieure (196) du canal d'évacuation d'air (160), des éléments de filtrage (154) des filtres (146) pendant en direction sensiblement verticale, de la paroi de délimitation inférieure (196) du canal d'évacuation d'air (160) vers une partie inférieure (138) du compartiment d'écoulement (128).

24. Installation selon l'une des revendications 1 à 23, **caractérisée en ce que** la zone traversée du compartiment d'écoulement (128) est délimitée par un convoyeur collecteur (178) sur le bas, lequel recueille la matière contenant du matériau de sous-couche et l'excédent de peinture liquide séparé.
